# EUROPÄISCHE PATENTSCHRIFT

(11) **EP 3 355 098 B1**
(45) Veröffentlichungstag und Bekanntmachung des Hinweises auf die Patenterteilung: **09.09.2026**
(21) Anmeldenummer: 18000043.2
(22) Anmeldetag: 19.01.2018
(51) Int. Cl.: G02C 7/02

(54) **BELEGUNG EINES AUGENMODELLS ZUR OPTIMIERUNG VON BRILLENGLÄSERN MIT MESSDATEN**
ASSIGNMENT OF AN EYES MODEL FOR OPTIMIZING EYEGLASS LENSES WITH MEASUREMENT DATA
MISE EN ÉTAT D'OCCUPATION D'UN MODÈLE D' IL PERMETTANT D'OPTIMISER DES VERRE DE LUNETTES COMPORTANT DES DONNÉES DE MESURE

(30) Priorität: 27.01.2017 DE 102017000772; 23.08.2017 DE 102017007974
(43) Veröffentlichungstag der Anmeldung: 01.08.2018
(73) Patentinhaber: Rodenstock GmbH, 80687 München (DE)
(72) Erfinder: Trumm, Stephan, 80999 München (DE); Becken, Wolfgang, 82061 Neuried (DE); Altheimer, Helmut, 87650 Baisweil-Lauchdorf (DE); Muschielok, Adam, 81369 München (DE); Bénard, Yohann, 81541 München (DE); Esser, Gregor, 80686 München (DE); Müller, Werner, 75443 Ötisheim (DE)
(74) Vertreter: Müller-Boré & Partner Patentanwälte PartG mbB

(56) Entgegenhaltungen:
- DE-A1- 102012 000 390

## Beschreibung

Die vorliegende Erfindung betrifft ein Verfahren, eine Vorrichtung und ein entsprechendes Computerprogrammerzeugnis zur Berechnung (Optimierung) und Herstellung eines Brillenglases mit Hilfe eines teilweise individuellen Augenmodells.

Für die Herstellung bzw. Optimierung von Brillengläsern, insbesondere von individuellen Brillengläsern wird jedes Brillenglas so gefertigt, dass für jede gewünschte Blickrichtung oder jeden gewünschten Objektpunkt eine möglichst gute Korrektur eines Refraktionsfehlers des jeweiligen Auges des Brillenträgers erreicht wird. Im Allgemeinen gilt ein Brillenglas für eine gegebene Blickrichtung dann als vollkorrigierend, wenn die Werte für Sphäre, Zylinder und Achse der Wellenfront beim Passieren der Scheitelpunktkugel mit den Werten für Sphäre, Zylinder und Achse der Verordnung für das fehlsichtige Auge übereinstimmen. Bei der Refraktionsbestimmung für ein Auge eines Brillenträgers werden dioptrische Werte (insbesondere Sphäre, Zylinder, Achslage - also insbesondere sphäro-zylindrische Abweichungen) für eine weite (in der Regel unendliche) Entfernung und gegebenenfalls (für Mehrstärkengläser bzw. Gleitsichtgläser) eine Addition oder eine vollständige Nahrefraktion für eine nahe Entfernung (z.B. nach DIN 58208) bestimmt. Bei modernen Brillengläsern können zusätzlich auch von der Norm abweichende Objektentfernungen, die bei der Refraktionsbestimmung verwendet wurden, angegeben werden. Damit ist die Verordnung (insbesondere Sphäre, Zylinder, Achslage und gegebenenfalls Addition oder Nachrefraktion) festgelegt, die an einen Brillenglashersteller übermittelt wird. Kenntnisse über eine spezielle bzw. individuelle Anatomie des jeweiligen Auges oder die tatsächlich im Einzelfall vorliegenden Brechwerte des fehlsichtigen Auges sind dafür nicht erforderlich.

Eine vollständige Korrektur für alle Blickrichtungen gleichzeitig ist aber im Normalfall nicht möglich. Daher werden die Brillengläser derart gefertigt, dass sie vor allem in den hauptsächlichen Nutzungsbereichen, insbesondere in den zentralen Durchblicksbereichen eine gute Korrektur von Fehlsichtigkeiten des Auges und nur geringe Abbildungsfehler bewirken, während in peripheren Bereichen größere Abbildungsfehler zugelassen werden.

Um ein Brillenglas derart fertigen zu können, erfolgt zunächst eine Berechnung der Brillenglasflächen bzw. zumindest einer der Brillenglasflächen derart, dass dadurch die gewünschte Verteilung der unvermeidlichen Abbildungsfehler bewirkt wird. Diese Berechnung und Optimierung erfolgt üblicherweise mittels eines iterativen Variationsverfahrens durch Minimieren einer Zielfunktion. Als Zielfunktion wird insbesondere eine Funktion *F* mit folgendem funktionalen Zusammenhang zur sphärischen Wirkung *S,* zum Betrag der zylindrischen Wirkung Z und zur Achslage des Zylinders *α* (auch als "SZA"-Kombination bezeichnet) berücksichtigt und minimiert: $F = {\sum }_{i = 1}^{m} \left[{g}_{i , S Δ}{\left({S}_{Δ , i}-{S}_{Δ , i , Soll}\right)}^{2}+{g}_{i , Z Δ}{\left({Z}_{Δ , i}-{Z}_{Δ , i , Soll}\right)}^{2}+…\right]$

Dabei werden in der Zielfunktion *F* an den Bewertungsstellen *i* des Brillenglases zumindest die tatsächlichen Refraktionsdefizite der sphärischen Wirkung *S_{Δ,i}* und der zylindrischen Wirkung *Z_{Δ,i}* sowie Sollvorgaben für die Refraktionsdefizite der sphärischen Wirkung *S_{Δ,i,Soll}* und der zylindrischen Wirkung *Z_{Δ,i,Soll}* berücksichtigt.

Bereits in DE 103 13 275 wurde erkannt, dass es vorteilhaft ist, die Sollvorgaben nicht als absolute Werte der zu optimierenden Eigenschaften sondern als deren Abweichungen von der Verordnung, also als geforderte lokale Fehlanpassung anzugeben. Dies hat den Vorteil, dass die Sollvorgaben unabhängig von der Verordnung ( *Sph_{V}*, *Zyl_{V}*, *Achse_{V}*, *Pr_{V}*, *B_{V}* ) sind und die Sollvorgaben nicht für jede individuelle Verordnung geändert werden müssen. Als "Ist"-Werte der zu optimierenden Eigenschaften fließen in die Zielfunktion somit auch nicht absolute Werte dieser optischen Eigenschaften, sondern die Abweichungen von der Verordnung ein. Dies hat den Vorteil, dass die Sollvorgaben unabhängig von der Verordnung vorgegeben werden können und nicht für jede individuelle Verordnung geändert werden müssen.

Die jeweiligen Refraktionsdefizite an den jeweiligen Bewertungsstellen werden vorzugsweise mit Gewichtungsfaktoren *g_{i,sΔ}* bzw. *g_{i,zΔ}* berücksichtigt. Dabei bilden die Sollvorgaben für die Refraktionsdefizite der sphärischen Wirkung *S_{Δ,i,Soll}* und/oder der zylindrischen Wirkung *Z_{Δ,i,Soll}* insbesondere zusammen mit den Gewichtungsfaktoren *g_{i,sΔ}* bzw. *g_{i,zΔ}* das sogenannte Brillenglasdesign. Darüber hinaus können insbesondere auch weitere Residuen, insbesondere weitere zu optimierende Größen, wie z.B. Koma und/oder sphärische Aberration und/oder Prisma und/oder Vergrößerung und/oder anamorphotische Verzerrung, usw., berücksichtigt werden, was insbesondere durch den Ausdruck "+..." in der oben genannten Formel für die Zielfunktion F angedeutet ist.

In manchen Fällen kann es zu einer deutlichen Verbesserung insbesondere einer individuellen Anpassung eines Brillenglases beitragen, wenn bei der Optimierung des Brillenglases nicht nur Abbildungsfehler bis zur zweiten Ordnung (Sphäre, Betrag des Astigmatismus und Achslage), sondern auch höherer Ordnung (z.B. Koma, Dreiblattfehler, sphärische Aberration) berücksichtigt werden.

Es ist aus dem Stand der Technik bekannt, für optische Elemente und insbesondere für Brillengläser, die durch mindestens zwei brechende, refraktive Grenzflächen begrenzt sind, die Form einer Wellenfront zu bestimmen. Dies kann beispielsweise durch numerische Berechnung einer ausreichenden Anzahl an Nachbarstrahlen erfolgen, verbunden mit einem anschließenden Fit der Wellenfront durch Zernike-Polynome. Ein anderer Ansatz beruht auf einer lokalen Wellenfrontdurchrechnung bei der Refraktion (siehe WO 2008/089999 A1). Hierbei wird pro Durchblickpunkt nur ein einziger Strahl berechnet (der Hauptstrahl) und begleitend die Ableitungen der Pfeilhöhen der Wellenfront nach den transversalen (zum Hauptstrahl senkrechten) Koordinaten. Diese Ableitungen können bis zu einer bestimmten Ordnung gebildet werden, wobei die zweiten Ableitungen die lokalen Krümmungseigenschaften der Wellenfront (wie z.B. Brechwert, Astigmatismus) beschreiben und die höheren Ableitungen mit den Abbildungsfehlern höherer Ordnung zusammenhängen.

Bei einer Durchrechnung von Licht durch ein Brillenglas werden die lokalen Ableitungen der Wellenfronten an einer geeigneten Position im Strahlverlauf berechnet, um sie dort mit erwünschten Werten, die aus der Refraktion des Brillenglasträgers hervorgehen, zu vergleichen. Als solche Position, an der eine Auswertung der Wellenfronten stattfindet, wird in der Regel die Scheitelpunktkugel oder beispielsweise die Hauptebene des Auges bei der entsprechenden Blickrichtung herangezogen. Dabei wird angenommen, dass eine sphärische Wellenfront vom Objektpunkt ausgeht und bis zur ersten Brillenglasfläche propagiert. Dort wird die Wellenfront gebrochen und propagiert anschließend zur zweiten Brillenglasfläche, wo sie wieder gebrochen wird. Die letzte Propagation findet dann von der zweiten Grenzfläche bis zur Scheitelpunktkugel (oder der Hauptebene des Auges) statt, wo die Wellenfront mit vorgegebenen Werten für die Korrektion der Refraktion des Auges des Brillenträgers verglichen wird.

Um diesen Vergleich auf Basis der ermittelten Refraktionsdaten des jeweiligen Auges durchzuführen, wird der Auswertung der Wellenfront an der Scheitelpunktkugel ein etabliertes Modell des fehlsichtigen Auges unterstellt, in welchem einem rechtsichtigen Grundauge eine Fehlsichtigkeit (Refraktionsdefizit) überlagert wird. Dies hat sich besonders bewährt, da hierfür weitergehende Kenntnisse über die Anatomie bzw. Optik des jeweiligen Auges (z.B. Verteilung der Brechwerte, Augenlänge, Längenametropie und/oder Brechwertametropie) nicht erforderlich sind. Ausführliche Beschreibungen dieses Modells aus Brillenglas und Refraktionsdefizit sind beispielsweise in Dr. Roland Enders "Die Optik des Auges und der Sehhilfen", Optische Fachveröffentlichung GmbH, Heidelberg, 1995, Seiten 25 ff. und in Diepes, Blendowske "Optik und Technik der Brille", Optische Fachveröffentlichung GmbH, Heidelberg, 2002, Seiten 47 ff. enthalten. Als bewährtes Modell wird insbesondere das darin beschriebene Korrektionsmodell nach REINER verwendet.

Dabei wird als Refraktionsdefizit der Mangel oder der Überschuss an Brechwert des optischen Systems des fehlsichtigen Auges im Vergleich zu einem gleich langen rechtsichtigen Auge (Restauge) angesehen. Der Brechwert des Refraktionsdefizits ist insbesondere annähernd gleich der Fernpunktrefraktion mit negativem Vorzeichen. Für eine vollständige Korrektur der Fehlsichtigkeit bilden das Brillenglas und das Refraktionsdefizit zusammen ein Fernrohrsystem (afokales System). Das Restauge (fehlsichtiges Auge ohne eingefügtes Refraktionsdefizit) wird als rechtsichtig angenommen. Ein Brillenglas gilt damit als vollkorrigierend für die Ferne, wenn sein bildseitiger Brennpunkt mit dem Fernpunkt des fehlsichtigen Auges und damit auch mit dem objektseitigen Brennpunkt des Refraktionsdefizits zusammenfällt.

Ein weiteres Dokument, das die Optimierung und Herstellung eines Brillenglases auf der Grundlage eines individuellen Augenmodells beschreibt, ist DE 10 2012 000 390 A1.

Aufgabe der Erfindung ist es, ein verbessertes Verfahren zum Berechnen oder Optimieren eines Brillenglases zum Zweck der Herstellung des Brillenglases, vorzugsweise eines progressiven Brillenglases, anzugeben, wobei das Brillenglas bereits mit einfachen Messungen individueller, optischer und Augen-anatomischer Daten sehr wirkungsvoll an die individuellen Anforderungen des Brillenträgers angepasst wird. Diese Aufgabe wird durch ein computerimplementiertes Verfahren, eine Vorrichtung, ein Computerprogrammerzeugnis und ein Speichermedium mit den in den unabhängigen Ansprüchen angegebenen Merkmalen gelöst. Bevorzugte Ausführungsformen sind Gegenstand der abhängigen Ansprüche.

Gemäß einem ersten Aspekt bietet die Erfindung somit ein computerimplementiertes Verfahren zum Berechnen oder Optimieren eines Brillenglases zum Zweck der Herstellung des Brillenglases für zumindest ein Auge eines Brillenträgers. Dazu werden zunächst individuelle Refraktionsdaten des zumindest einen Auges des Brillenträgers bereitgestellt. Diese individuellen Refraktionsdaten basieren dabei auf einer individuellen Refraktionsbestimmung. Die Refraktionsdaten umfassen dabei zumindest die sphärische und astigmatische Fehlsichtigkeit des Auges. In einer bevorzugten Ausführungsform beschreiben die erfassten Refraktionsdaten auch Abbildungsfehler höherer Ordnung (HOA). Vorzugsweise werden die Refraktionsdaten (insbesondere soweit sie Abbildungsfehler höherer Ordnung umfassen auch aberrometrische Daten genannt) beispielsweise vom Augenoptiker mittels eines Autorefraktometers oder eines Aberrometers gemessen (objektive Refraktionsdaten). Alternativ oder zusätzlich kann auch eine subjektiv bestimmte Refraktion herangezogen werden. Die Refraktionsdaten werden anschließend vorzugsweise an einen Brillenglashersteller übermittelt und/oder einem Berechnungs- bzw. Optimierungsprogramm zur Verfügung gestellt. Sie stehen damit zur Verfügung, um für das erfindungsgemäße Verfahren erfasst, insbesondere in digitaler Form ausgelesen und/oder empfangen zu werden.

Vorzugsweise umfasst das Bereitstellen der individuellen Refraktionsdaten ein Bereitstellen bzw. Ermitteln der Vergenzmatrix **S***_{M}* der Fehlsichtigkeit des zumindest einen Auges. Dabei beschreibt die Vergenzmatrix eine Wellenfront vor dem Auge des von einem Punkt auf der Netzhaut auslaufenden bzw., in einem Punkt auf der Netzhaut konvergierenden Lichts. Messtechnisch können solche Refraktionsdaten beispielsweise dadurch ermittelt werden, dass mittels eines Lasers ein Punkt auf der Netzhaut des Brillenträgers beleuchtet wird, von welchem aus sich dann Licht ausbreitet. Während das Licht von dem beleuchteten Punkt aus zunächst im Glaskörper des Auges im Wesentlichen kugelförmig divergiert, kann sich die Wellenfront beim Durchlaufen des Auges insbesondere an optischen Grenzflächen im Auge (z.B. der Augenlinse und/oder der Hornhaut) verändern. Durch eine Messung der Wellenfront vor dem Auge sind somit die Refraktionsdaten des Auges messbar. Diese Wellenfront wird zum Zwecke der Beschreibung im Folgenden auch Refraktionswellenfront bezeichnet.

Außerdem umfasst das erfindungsgemäße Verfahren ein Festlegen eines individuellen Augenmodells, welches zumindest gewisse Vorgaben über geometrische und optische Eigenschaften eines Modellauges individuell festlegt. So werden in dem erfindungsgemäßen individuellen Augenmodell zumindest eine Form (Topographie) einer Hornhautvorderfläche des Modellauges und weitere Daten festgelegt, die die optischen Eigenschaften im Inneren des Modellauges soweit festlegen, dass damit eine Referenzaberration an einer Bewertungsfläche innerhalb des Modellauges festgelegt ist. Insbesondere beschreibt die Referenzaberration eine Aberration einer im Wesentlichen in einem Punkt auf einer Netzhaut des Augenmodells konvergierenden Referenzwellenfront (unmittelbar oder mittelbar) vor einer Brechung an einer Linsenrückfläche einer Linse des Modellauges. Die Konvergenz "im Wesentlichen" in einem Punkt bedeutet dabei insbesondere, dass eine vorgegebene Abweichung der Konvergenz von einem Punkt zulässig sein kann, soweit diese Abweichung die geforderte oder gewünschte Genauigkeit der Anpassung des Brillenglases nicht beeinträchtigt. Beispielsweise kann sich eine nicht exakte Konvergenz in einem Punkt dann ergeben und diese kann auch akzeptable sein, wenn die Referenzaberration die wichtigsten bzw. dominanten Anteile oder Terme der Fehlsichtigkeit des Benutzers wiedergibt (z.B. Aberrationen bis zu einer vorgegebenen Ordnung), andere Terme (z.B. Aberrationen höherer als der vorgegebenen Ordnung) aber außeracht lässt.

In bevorzugten Ausführungsformen legt das Augenmodell desweiteren einen Hornhaut-Linsen-Abstand *d_{CL}* (dieser Abstand zwischen der Hornhaut und einer Linsenvorderfläche des Modellauges wird auch Vorderkammertiefe bezeichnet), Parameter der Linse des Modellauges, welche insbesondere die optische Wirkung der Linse des Modellauges zumindest teilweise festlegen, und einen Linsen-Netzhaut-Abstand *d_{LR}* (dieser Abstand zwischen der Linse, insbesondere der Linsenrückfläche, und der Netzhaut des Modellauges wird auch als Glaskörperlänge bezeichnet) in bestimmter Weise, nämlich derart fest, dass das Modellauge die bereitgestellten individuellen Refraktionsdaten aufweist, d.h. dass eine im Modellauge von einem Punkt der Netzhaut des Modellauges auslaufende Wellenfront mit der für das reale Auge des Brillenträger ermittelte (z.B. gemessene oder anderweitig ermittelte) Wellenfront (bis zu einer gewünschten Genauigkeit) übereinstimmt. Als Parameter der Linse des Modellauges (Linsenparameter) können beispielsweise entweder geometrische Parameter (Form der Linsenflächen und deren Abstand) und vorzugsweise Materialparameter (z.B. Brechungsindizes der einzelnen Komponenten des Modellauges) so vollständig festgelegt werden, dass diese eine optische Wirkung der Linse zumindest teilweise festlegen. Alternativ oder zusätzlich können als Linsenparameter auch Parameter festgelegt werden, die die optische Wirkung der Linse des Modellauges direkt beschreiben.

So wird in einem einfachen Fall eines Augenmodells die Refraktion des Auges durch das optische System bestehend aus der Hornhautvorderfläche, der Augenlinse und der Netzhaut bestimmt. In diesem einfachen Modell legen die Lichtbrechung an der Hornhautvorderfläche und die Brechkraft der Augenlinse (vorzugsweise einschließlich der sphärischen und astigmatischen Aberrationen und Aberrationen höherer Ordnung) zusammen mit deren Positionierung relativ zur Netzhaut die Refraktion des Modellauges fest.

Dabei werden die einzelnen Größen (Parameter) des Modellauges anhand von individuellen Messwerten für das Auge des Brillenträgers und/oder anhand von Standardwerten und/oder anhand der bereitgestellten individuellen Refraktionsdaten entsprechend festgelegt. Insbesondere können manche der Parameter (z.B. die Topographie der Hornhautvorderfläche und/oder die Vorderkammertiefe und/oder zumindest eine Krümmung einer Linsenfläche, usw.) direkt als individuelle Messwerte bereitgestellt werden. Andere Werte können auch - insbesondere dann, wenn es sich um Parameter handelt, deren individuelle Messung sehr aufwendig ist - aus Werten von Standardmodellen für ein menschliches Auge übernommen werden. Insgesamt müssen aber nicht alle (geometrischen) Parameter des Modellauges aus individuellen Messungen oder aus Standardmodellen vorgegeben werden. Vielmehr kann für einen oder mehrere (freie) Parameter eine individuelle Anpassung durch Berechnung unter Berücksichtigung der vorgegebenen Parameter derart vorgenommen, dass das dann resultierende Modellauge die bereitgestellten individuellen Refraktionsdaten aufweist. Je nach Anzahl der in den bereitgestellten individuellen Refraktionsdaten enthaltenen Parameter können entsprechend viele (freie) Parameter des Augenmodells individuell angepasst (gefittet) werden.

Für die Berechnung bzw. Optimierung des Brillenglases werden eine erste Fläche und eine zweite Fläche des Brillenglases insbesondere als Startflächen mit einer vorgegebenen (individuelle) Position relativ zum Modellauge vorgegeben. In einer bevorzugten Ausführungsform wird nur eine der beiden Flächen optimiert.

Vorzugsweise handelt es sich hierbei um die Rückfläche des Brillenglases. Vorzugsweise wird dabei sowohl für die Vorderfläche als auch für die Rückfläche des Brillenglases eine entsprechende Startfläche vorgegeben. In einer bevorzugten Ausführungsform wird während des Optimierungsverfahrens aber nur eine Fläche iterativ verändert bzw. optimiert. Die andere Fläche des Brillenglases kann zum Beispiel eine einfache sphärische oder rotationssymmetrische asphärische Fläche sein. Allerdings ist es auch möglich, beide Flächen zu optimieren.

Ausgehend von den beiden vorgegebenen Flächen umfasst das Verfahren ein Ermitteln des Verlaufs eines Hauptstrahls durch zumindest einen Durchblickspunkt (i) zumindest einer zu berechnenden oder optimierenden Fläche des Brillenglases in das Modellauge. Der Hauptstrahl beschreibt den geometrischen Strahlverlauf ausgehend von einem Objektpunkt durch die beiden Brillenglasflächen und zumindest die Hornhautvorderfläche, vorzugsweise auch durch die Linse des Modellauges insbesondere bis zur Netzhaut des Modellauges.

Außerdem umfasst das Verfahren ein Auswerten einer Aberration einer entlang des Hauptstrahls propagierenden, aus einer auf die erste Fläche des Brillenglases auftreffenden sphärischen Wellenfront resultierenden Wellenfront an der Bewertungsfläche im Vergleich zur Referenzaberration, insbesondere im Vergleich zu einer entsprechenden Referenzwellenfront.

Insbesondere wird dazu eine auf die erste Fläche (Vorderfläche) des Brillenglases entlang des Hauptstrahls auftreffenden, sphärischen Wellenfront (*w₀*) vorgegeben. Diese sphärische Wellenfront beschreibt das von einem Objektpunkt ausgehende Licht (Objektlicht). Die Krümmung der sphärischen Wellenfront beim Auftreffen auf die erste Fläche des Brillenglases entspricht dem Kehrwert des Objektabstandes. Vorzugsweise umfasst das Verfahren somit ein Vorgeben eines Objektabstandsmodells, welches jeder Blickrichtung oder jedem Durchblickspunkt der zumindest einen zu optimierenden Fläche des Brillenglases eine Objektentfernung zuordnet. Damit wird vorzugsweise die individuelle Gebrauchssituation, in der das herzustellende Brillenglas zum Einsatz kommen soll, beschrieben.

Die auf das Brillenglas auftreffende Wellenfront wird nun an der Vorderfläche des Brillenglases vorzugsweise zum ersten Mal gebrochen. Anschießend propagiert die Wellenfront entlang des Hauptstrahls innerhalb des Brillenglases von der Vorderfläche zur Rückfläche, wo sie zum zweiten Mal gebrochen wird. Anschließend propagiert die durch das Brillenglas transmittierte Wellenfront nun entlang des Hauptstrahls weiter bis zur Hornhautvorderfläche des Auges, wo sie wiederum gebrochen wird. Vorzugsweise wird die Wellenfront nach einer weiteren Propagation innerhalb des Auges bis zur Augenlinse auch dort wiederum gebrochen. In der Realität propagiert das Objektlicht nach der Brechung an der Augenlinse weiter bis zur Netzhaut des Auges. Je nach optischen Eigenschaften der einzelnen optischen Elemente (Brillenglasflächen, Hornhautvorderfläche, Augenlinse) führt jeder Brechungsvorgang auch zu einer Deformation der Wellenfront.

Um eine exakte Abbildung des Objektpunktes auf einen Bildpunkt auf der Netzhaut zu erreichen, müsste die Wellenfront die Augenlinse vorzugsweise als konvergierende sphärische Wellenfront verlassen, deren Krümmung genau dem Kehrwert des Abstandes zur Netzhaut entspricht. Ein Vergleich der vom Objektpunkt auslaufenden Wellenfront mit einer (im Idealfall einer perfekten Abbildung) in einem Punkt auf der Netzhaut konvergierenden Wellenfront (Referenzlicht) erlaubt somit die Auswertung einer Fehlanpassung. Dieser Vergleich und damit die Auswertung der Wellenfront des Objektlichts in dem individuellen Augenmodell erfolgt erfindungsgemäß an einer Bewertungsfläche innerhalb des Modellauges und zwar noch vor der Propagation des Objektlichts von der Augenlinse (z.B. Linsenrückfläche oder Austrittspupille) zur Netzhaut. Für jeden Objektpunkt erfolgt die Berechnung des Objektlichts somit zwar zumindest bis zum Modellauge oder in das Modellauge hinein, nicht aber bis zur Netzhaut. Um den Vergleich und damit die Auswertung der Wellenfront des Objektlichts durchführen zu können, wird eine Referenzaberration an der Bewertungsfläche ermittelt oder bereitgestellt, die die optischen Abbildungseigenschaften, insbesondere den Einfluss auf die die Fehlsichtigkeit des Auges auf dem optischen Pfad zwischen der Bewertungsfläche und der Netzhaut beschreibt. Vorzugsweise wird eine entsprechende Referenzwellenfront ermittelt, die eine im Wesentlichen in einem Punkt auf der Netzhaut des individuellen Augenmodells konvergierende Wellenfront beschreibt. Nachdem die Bewertungsfläche erfindungsgemäß nicht hinter der Augenlinse ober nicht hinter der Linsenrückfläche liegen soll, muss die Referenzwellenfront zumindest von der Linse des Modellauges zur Netzhaut propagieren, um in einem Punkt auf der Netzhaut zu konvergieren.

Falls die Bewertungsfläche in einem Beispiel, das nicht unter den beanspruchten Gegenstand fällt, an der Linsenrückfläche der Linse, vor der Brechung an der Linsenrückfläche des Modellauges vorgesehen wird, kann die resultierende Wellenfront des Objektlichts vorzugsweise einfach einer sphärischen Wellenfront des Referenzlichts, welche (rückwärts) an der Linsenrückfläche gebrochen wird, verglichen werden. Hierzu umfasst das Verfahren somit vorzugsweise ein Vorgeben einer auf die erste Fläche des Brillenglases auftreffenden sphärischen Wellenfront, ein Ermitteln einer durch die Wirkung zumindest der ersten und zweiten Fläche des Brillenglases, der Hornhautvorderfläche und der Linsenvorderfläche sowie der Linsendicke des Modellauges aus der sphärischen Wellenfront resultierenden Wellenfront in dem zumindest einen Auge, und eine Auswertung der Aberration der resultierenden Wellenfront im Vergleich zu einer auf die Netzhaut konvergierenden sphärischen Wellenfront vor deren Brechung an der Linsenrückfläche.

Falls hingegen eine Bewertungsfläche innerhalb der Linse oder zwischen der Hornhautvorderfläche und der Linse des Modellauges vorgesehen sein soll, wird als Referenzlicht vorzugsweise einfach eine umgekehrte Propagation von einem Punkt auf der Netzhaut durch die einzelnen Komponenten des Modellauges bis hin zur Bewertungsfläche simuliert, um dort einen Vergleich des Objektlichts mit dem Referenzlicht vorzunehmen. Vorzugsweise umfasst das Verfahren somit ein Ermitteln der Referenzwellenfront durch Berechnung von Propagation und Brechung ausgehend von einem Punkt auf der Netzhaut des Modellauges durch das Modellauge bis zur Bewertungsfläche.

Alternativ kann für die Ermittlung der Referenzwellenfront an der Bewertungsfläche von einer individuell gemessenen Refraktionswellenfront vor dem Auge des Brillenträgers ausgegangen und die Ausbreitung dieser Wellenfront in das Modellauge hinein bis zur Bewertungsfläche berechnet werden. Vorzugsweise umfasst somit das Bereitstellen von individuellen Refraktionsdaten des zumindest einen Auges des Brillenträgers ein Bereitstellen einer individuellen Refraktionswellenfront des Auges des Brillenträgers, welche eine aus dem Auge des Brillenträgers austretende Wellenfront eines von einem Punkt auf der Netzhaut des Auges des Brillenträgers auslaufenden Lichts beschreibt, und wobei das Verfahren außerdem ein Ermitteln der Referenzwellenfront anhand der bereitgestellten individuellen Refraktionswellenfront durch Berechnung von Propagation und Brechung ausgehend von der individuellen Refraktionswellenfront durch das Modellauge bis zur Bewertungsfläche umfasst. Je nach Position der Bewertungsfläche wird vorzugsweise die Methode angewandt, bei der weniger Propagationsschritte berechnet werden müssen.

Wie allerdings bereits eingangs erwähnt, ist eine vollständige Korrektion der Refraktion des Auges gleichzeitig für alle Blickrichtungen des Auges, also für alle Durchblickspunkte der zumindest einen zu optimierenden Brillenglasfläche, im Allgemeinen nicht möglich. Je nach Blickrichtung wird somit vorzugsweise eine absichtliche Fehlanpassung des Brillenglases vorgegeben, welche je nach Anwendungssituation insbesondere in den hauptsächlich genutzten Bereichen des Brillenglases (z.B. zentrale Durchblickspunkte) gering, in den wenig genutzten Bereichen (z.B. periphere Durchblickspunkte) etwas höher sind. Diese Vorgehensweise ist dem Prinzip nach aus herkömmlichen Optimierungsverfahren bereits bekannt.

Um das Brillenglas zu optimieren, wird nun die zumindest eine zu berechnende oder optimierende Fläche des Brillenglases solange iterativ variiert, bis eine Aberration der resultierenden Wellenfront einer vorgegebenen Sollaberration entspricht, also insbesondere um vorgegebene Werte der Aberration von der Wellenfront des Referenzlichts (z.B. einer sphärischen Wellenfront, deren Krümmungsmittelpunkt auf der Netzhaut liegt) abweicht. Die Wellenfront des Referenzlichts wird hier auch als Referenzwellenfront bezeichnet. Vorzugsweise umfasst das Verfahren dazu ein Minimieren einer Zielfunktion F, insbesondere analog zu der eingangs bereits beschriebenen Zielfunktion. Weitere bevorzugte Zielfunktionen, insbesondere bei Berücksichtigung von Abbildungsfehlern höherer Ordnung sind auch weiter unten noch beschrieben.

Im Rahmen der vorliegenden Erfindung wurde somit vorgeschlagen, für die Berechnung bzw. Optimierung eines Brillenglases ein derart individuelles Augenmodell festzulegen, welches vorzugsweise bis zur Netzhaut individuell an den einzelnen Brillenträger angepasst ist. An diesem individuellen Augenmodell wird dann eine numerische Strahl- und Wellenfrontberechnung derart durchgeführt, dass diese durch die Bewertungsfläche vorzugsweise in zwei Abschnitte unterteilt wird, von denen ein erster Abschnitt für jeden Durchblickspunkt der zumindest einen zu berechnenden bzw. optimierenden Fläche des Brillenglases eine Berechnung des Objektlicht bis zum individuellen Modellauge oder in das individuelle Modellauge hinein, nicht aber bis hinter die Linse des Modellauges umfasst, während ein zweiter Abschnitt das Ermitteln der dem individuellen Augenmodell entsprechenden Referenzaberration (insbesondere der Referenzwellenfront) umfasst.

Damit wird für jeden Durchblickspunkt insbesondere eine Propagation des Objektlichts bis hin zur Hornhautvorderfläche und besonders bevorzugt auch eine Brechung der Wellenfront des Objektlichtes zumindest an der Hornhautvorderfläche berechnet. Durch die Positionierung der Bewertungsfläche vor der Linsenrückfläche muss aber zumindest nicht für jeden Durchblickspunkt und vor allem nicht für jeden Iterationsschritt eigens eine Propagation des Objektlichts von der Linse des Modellauges hin zur Netzhaut berechnet werden. Stattdessen wird mittels der Referenzaberration bzw. Referenzwellenfunktion an der Bewertungsfläche eine Rückwärtspropagation von der Netzhaut zur Bewertungsfläche simuliert, die aber nicht für jeden Iterationsschritt und unter Umständen sogar nicht einmal für jeden Durchblickspunkt erneut berechnet werden muss.

Im Rahmen der vorliegenden Erfindung stellte sich heraus, dass dies eine bemerkenswerte Verbesserung der individuellen Anpassung bei vergleichsweise geringem Aufwand bringt. Während die Durchrechnung des Objektlichts bis zum Auge in Verbindung mit dem individuellen Augenmodell die individuelle Anpassung des Brillenglases deutlich verbessert, kann andererseits durch das Abbrechen der vollständigen Durchrechnung des Objektlichts vor der Propagation von der Linse zur Netzhaut des Modellauges eine schnelle Konvergenz des iterativen, numerischen Prozesses erreicht werden, ohne dass die Genauigkeit der Anpassung wesentlich darunter leidet. Insbesondere kann dies auch darauf zurückgeführt werden, dass die ermittelte Referenzaberration bzw. Referenzwellenfunktion zwar Teile der genauen, Durchblickspunkt-spezifischen Wellenfrontdurchrechnung ersetzt, aber andererseits ebenfalls auf dem individuellen Augenmodell, insbesondere den individuellen Refraktionsdaten beruht.

Erfindungsgemäß liegt die Bewertungsfläche an einer Grenzfläche des Modellauges vor der Linsenrückfläche des Modellauges, insbesondere an der Linsenvorderfläche oder an der Hornhaut beziehungsweise an einer Fläche (Grenzfläche) der Hornhaut (z.B. Hornhautrückfläche). Besonders bevorzugt beschreibt die Referenzaberration die Aberration der im Wesentlichen in einem Punkt auf einer Netzhaut des Augenmodells konvergierenden Referenzwellenfront vor einer Brechung an der Grenzfläche, an welcher die Bewertungsfläche liegt. Besonders bevorzugt umfasst dabei das Auswerten der Aberration der entlang des Hauptstrahls propagierenden Wellenfront an der Bewertungsfläche ein Berechnen einer Brechung der Wellenfront an der Grenzfläche, an welcher die Bewertungsfläche liegt. Der Wechsel von Propagationsschritten und Brechungsschritten in der numerischen Beschreibung und Berechnung des Verlaufs des Objektlichts endet somit mit einem Brechungsschritt, während der nachfolgende Propagationsschritt bereits Teil der Simulation der Referenzaberration bzw. Referenzwellenfunktion darstellt. Gerade diese Vorgehensweise hat sich als besonders bevorzugt herausgestellt. Insbesondere stellt die Berechnung der Propagation der Wellenfronten hohe Anforderungen an numerische Berechnungseinheiten und benötigt vergleichsweise viel Prozessorzeit. Durch das Abbrechen der Berechnung des Objektlichts nach einer Brechung, muss die nachfolgende Lichtpropagation nicht für jeden Durchblickspunkt und jeden Iterationsschritt erneut berechnet werden. Stattdessen kann für jeden Iterationsschritt dieselbe Referenzaberration bzw. Referenzwellenfunktion verwendet werden, wobei dennoch eine ausgesprochen gute individuelle Anpassung des Brillenglases erreicht wird, zumindest soweit die Referenzwellenfunktion erfindungsgemäß auf dem individuellen Augenmodell basiert.

In einer besonders bevorzugten Ausführungsform liegt die Bewertungsfläche an der Linsenvorderfläche. Vorzugsweise wird insbesondere in diesem Fall im individuellen Augenmodell desweiteren zumindest
-- ein Hornhaut-Linsen-Abstand; und
-- die Form einer Linsenvorderfläche der Linse des Modellauges derart anhand von individuellen Messwerten für das Auge des Brillenträgers und/oder von Standardwerten und/oder anhand der bereitgestellten individuellen Refraktionsdaten festlegt werden, dass das Modellauge (12) die bereitgestellten individuellen Refraktionsdaten aufweist. Die Referenzwellenfront kann dabei auf zumindest zwei unterschiedliche, bevorzugte Weisen ermittelt werden, nämlich durch Vorwärts-Propagation und -Brechung ausgehend von einer Refraktionswellenfront vor dem Auge des Brillenträgers oder durch eine Rückwärts-Propagation und -Brechung ausgehend von einem Punkt auf der Netzhaut des Modellauges.

Für die Vorwärts-Propagation und Brechung des Referenzlichts umfasst das Bereitstellen von individuellen Refraktionsdaten des zumindest einen Auges des Brillenträgers vorzugsweise ein Bereitstellen einer individuellen Refraktionswellenfront des Auges des Brillenträgers, welche eine aus dem Auge des Brillenträgers austretenden Wellenfront eines von einem Punkt auf der Netzhaut des Auges des Brillenträgers auslaufenden Lichts beschreibt. Dies kann beispielsweise eine direkt von einem Autorefraktometer oder Aberrometer für das Auge des Brillenträgers gemessene Wellenfront sein. Ausgehend von dieser Refraktionswellenfront kann die Referenzwellenfront durch Berechnung von Brechung an der Hornhautvorderfläche des Modellauges, Propagation über den Hornhaut-Linsen-Abstand und Brechung an der Linsenvorderfläche des Modellauges ermittelt werden.

Für die Rückwärts-Propagation und -Brechung wird im individuellen Augenmodell vorzugsweise desweiteren zumindest
-- eine Linsendicke; und
-- die Form einer Linsenrückfläche der Linse des Modellauges,
-- besonders bevorzugt auch ein Linsen-Netzhaut-Abstand derart anhand von individuellen Messwerten für das Auge des Brillenträgers und/oder von Standardwerten und/oder anhand der bereitgestellten individuellen Refraktionsdaten festlegt werden, dass das Modellauge (12) die bereitgestellten individuellen Refraktionsdaten aufweist. Die Referenzwellenfront kann dann durch Vorgabe einer von der Netzhaut auslaufenden sphärischen Wellenfront und Berechnung von Brechung der sphärischen Wellenfront an der Linsenrückfläche sowie Propagation von der Linsenrückfläche zur Linsenvorderfläche ermittelt werden.

In einer anderen bevorzugten Ausführungsform liegt die Bewertungsfläche an der Hornhautvorderfläche. Dies ist besonders bevorzugt, wenn eine (gemessene) Refraktionswellenfront des Auges zusammen mit einer Hornhaut-Topographie vorliegt. Vorzugsweise umfasst das Bereitstellen von individuellen Refraktionsdaten des zumindest einen Auges des Brillenträgers ein Bereitstellen einer individuellen Refraktionswellenfront des Auges des Brillenträgers, welche eine aus dem Auge des Brillenträgers austretenden Wellenfront eines von einem Punkt auf der Netzhaut des Auges des Brillenträgers auslaufenden Lichts beschreibt. Die Referenzwellenfront kann dann anhand der bereitgestellten individuellen Refraktionswellenfront durch Berechnung von dessen Brechung an der Hornhautvorderfläche des Modellauges ermittelt werden.

Vorzugsweise wird dabei die Hornhautvorderfläche individuell gemessen und die Augenlinse des individuellen Augenmodells entsprechend berechnet, um die individuell bestimmten Refraktionsdaten zu erfüllen. Dabei wird in einer bevorzugten Ausführungsform die Hornhautvorderfläche (bzw. ihre Krümmung) entlang der Hauptschnitte individuell gemessen (Topometrie). In einer weiteren bevorzugten Ausführungsform wird die Topographie der Hornhautvorderfläche (d.h. die vollständige Beschreibung der Fläche) individuell gemessen. In einer weiteren bevorzugten Ausführungsform erfolgt das Festlegen des Hornhaut-Linsen-Abstandes anhand von individuellen Messwerten für den Hornhaut-Linsen-Abstand.

Soweit ein Augenmodell mit einer Linse auf Basis einer Linsenvorderfläche, einer Linsendicke und einer Linsenrückfläche verwendet wird, erfolgt in einer besonders bevorzugten Ausführungsform das Festlegen der Linsendicke und der Form der Linsenrückfläche anhand von vorgegebenen Werten (Standardwerten, beispielsweise aus der Fachliteratur), wobei weiter bevorzugt das Festlegen der Form der Linsenvorderfläche umfasst:
- Bereitstellen von Standardwerten für eine mittlere Krümmung der Linsenvorderfläche, und
- Berechnen der Form der Linsenvorderfläche unter Berücksichtigung der bereitgestellten individuellen Refraktionsdaten.

In einer weiteren bevorzugten Ausführungsform des detaillierteren Linsenmodells umfasst das Festlegen der Form der Linsenvorderfläche:
- Bereitstellen eines individuellen Messwerts einer Krümmung in einem Normalschnitt der Linsenvorderfläche.

In diesen Fall ist es besonders bevorzugt, wenn außerdem das Festlegen der Linsendicke und der Form der Linsenrückfläche anhand von Standardwerten erfolgt, und noch weiter bevorzugt das Festlegen der Form der Linsenvorderfläche umfasst:
- Berechnen der Form der Linsenvorderfläche unter Berücksichtigung der bereitgestellten individuellen Refraktionsdaten und des bereitgestellten individuellen Messwerts der Krümmung in einem Normalschnitt der Linsenvorderfläche.

Alternativ oder zusätzlich zur Form der Linse bzw. der Linsenflächen kann das Festlegen der Linsenparameter ein Festlegen einer optischen Wirkung der Linse umfassen. Insbesondere wird dabei zumindest eine Position zumindest einer Hauptebene und eine sphärische Wirkung (bzw. zumindest eine Brennweite) der Linse des Modellauges festgelegt. Besonders bevorzugt wird auch eine zylindrische Wirkung (Betrag und Achslage) der der Linse des Modellauges festgelegt. In einer weiteren bevorzugten Ausführungsform können auch optische Abbildungsfehler höherer Ordnungen der Linse des Modellauges festgelegt werden.

In einem weiteren Aspekt bietet die Erfindung eine Vorrichtung zum Berechnen oder Optimieren eines Brillenglases zum Zweck der Herstellung des Brillenglases für zumindest ein Auge eines Brillenträgers umfassend:
- eine Datenschnittstelle zum Bereitstellen von individuellen Refraktionsdaten des zumindest einen Auges des Brillenträgers
- ein Modellierungsmodul zum Festlegen eines individuellen Augenmodells, welches zumindest
   -- eine Form einer Hornhautvorderfläche eines Modellauges; und
   -- eine Referenzaberration an einer Bewertungsfläche innerhalb des Modellauges, wobei die Bewertungsfläche an einer Grenzfläche des Modellauges liegt und vor einer Linsenrückfläche des Modellauges angeordnet ist;
   derart anhand von individuellen Messwerten für das Auge des Brillenträgers und/oder von Standardwerten und/oder anhand der bereitgestellten individuellen Refraktionsdaten festgelegt werden, dass das Modellauge die bereitgestellten individuellen Refraktionsdaten aufweist, wobei die Referenzaberration insbesondere eine Aberration einer im Wesentlichen in einem Punkt auf einer Netzhaut des Augenmodells konvergierenden Referenzwellenfront vor einer Brechung an einer Linsenrückfläche einer Linse des Modellauges beschreibt;
- eine Flächenmodelldatenbank zum Vorgeben einer ersten Fläche und einer zweiten Fläche für das zu berechnende bzw. optimierende Brillenglas;
- ein Hauptstrahlermittlungsmodule zum Ermitteln des Verlaufs eines Hauptstrahls durch zumindest einen Durchblickspunkt (i) zumindest einer zu berechnenden oder optimierenden Fläche des Brillenglases in das Modellauge zumindest bis zur Bewertungsfläche;
- ein Auswertemodul zum Auswerten einer Aberration einer entlang des Hauptstrahls propagierenden, aus einer auf die erste Fläche des Brillenglases auftreffenden sphärischen Wellenfront resultierenden Wellenfront an der Bewertungsfläche im Vergleich zur Referenzaberration; und
- ein Optimierungsmodul iteratives Variieren der zumindest einen zu berechnenden oder optimierenden Fläche des Brillenglases bis die ausgewertete Aberration einer vorgegebenen Sollaberration entspricht.

Außerdem bietet die Erfindung ein Computerprogrammerzeugnis, insbesondere in Form eines Speichermediums oder eines Datenstroms, welches Programmcode enthält, der ausgelegt ist, wenn geladen und ausgeführt auf einem Computer, ein Verfahren zum Berechnen oder Optimieren eines Brillenglases zum Zweck der Herstellung des Brillenglases gemäß der vorliegenden Erfindung insbesondere in einer bevorzugten Ausführungsform durchzuführen.

Außerdem bietet die Erfindung ein Verfahren zum Herstellen eines Brillenglases umfassend:
Berechnen oder Optimieren eines Brillenglases nach dem Verfahren zum Berechnen oder Optimieren eines Brillenglases gemäß einem der vorliegenden Erfindung insbesondere in einer bevorzugten Ausführungsform; und
Fertigen des so berechneten oder optimierten Brillenglases.

Außerdem bietet die Erfindung eine Vorrichtung zum Herstellen eines Brillenglases umfassend:
Berechnungs- oder Optimierungsmittel, welche ausgelegt sind, das Brillenglas nach einem Verfahren zum Berechnen oder Optimieren eines Brillenglases gemäß der vorliegenden Erfindung insbesondere in einer bevorzugten Ausführungsform zu berechnen oder zu optimieren;
Bearbeitungsmittel, welche ausgelegt sind, das Brillenglas fertig zu bearbeiten.

Außerdem bietet die Erfindung eine Verwendung eines nach dem Herstellungsverfahren gemäß der vorliegenden Erfindung insbesondere in einer bevorzugten Ausführungsform hergestellten Brillenglases in einer vorgegebenen durchschnittlichen oder individuellen Gebrauchsstellung des Brillenglases vor den Augen eines bestimmten Brillenträgers zur Korrektur einer Fehlsichtigkeit des Brillenträgers.

Bevorzugte Ausführungsformen der Erfindung werden nachfolgend zumindest teilweise unter Bezugnahme auf die beigefügte Zeichnung beispielhaft erläutert. Dabei zeigt:

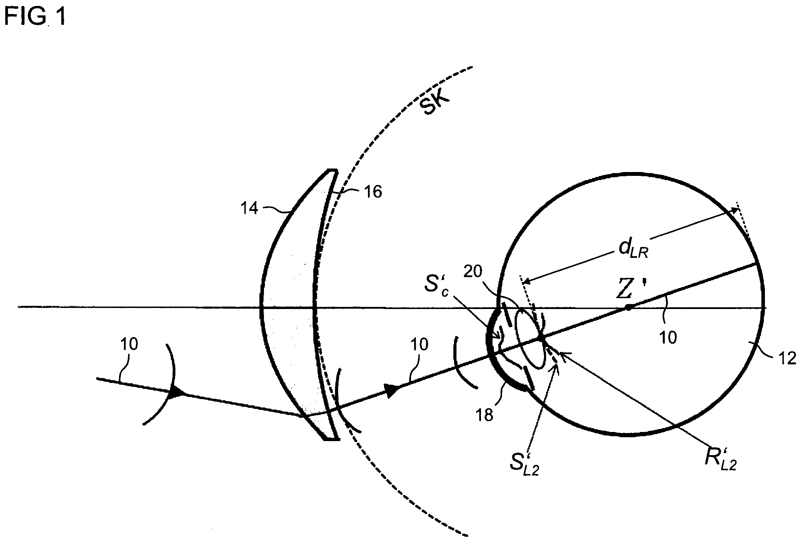

- Fig. 1: eine schematische Darstellung des physiologischen und physikalischen Modells eines Brillenglases und eines Auges zusammen mit einem Strahlverlauf in einer vorgegebenen Gebrauchsstellung

Fig. 1 zeigt eine schematische Darstellung des physiologischen und physikalischen Modells eines Brillenglases und eines Auges in einer vorgegebenen Gebrauchsstellung zusammen mit einem beispielhaften Strahlverlauf, welches einer individuellen Brillenglasberechnung bzw. -optimierung gemäß einer bevorzugten Ausführungsform der Erfindung zugrunde liegt.

Hierbei wird pro Durchblickspunkt des Brillenglases vorzugsweise nur ein einziger Strahl berechnet (der Hauptstrahl 10, der vorzugsweise durch den Augendrehpunkt Z' läuft), begleitend aber außerdem auch die Ableitungen der Pfeilhöhen der Wellenfront nach den transversalen (zum Hauptstrahl senkrechten) Koordinaten. Diese Ableitungen werden bis zur gewünschten Ordnung berücksichtigt, wobei die zweiten Ableitungen die lokalen Krümmungseigenschaften der Wellenfront beschreiben und die höheren Ableitungen mit den Abbildungsfehlern höherer Ordnungen zusammenhängen.

Bei der Durchrechnung von Licht durch das Brillenglas bis in das Auge 12 gemäß dem individuell bereitgestellten Augenmodell werden die lokalen Ableitungen der Wellenfronten im Endeffekt an einer geeigneten Position im Strahlverlauf ermittelt, um sie dort mit einer Referenzwellenfront zu vergleichen, welche in einem Punkt auf der Retina des Auges 12 konvergiert. Insbesondere werden die beiden Wellenfronten (d.h. die vom Brillenglas kommende Wellenfront und die Referenzwellenfront) in einer Bewertungsfläche miteinander verglichen.

Unter "Position" ist dabei nicht einfach nur ein bestimmter Wert der z-Koordinate (in Lichtrichtung) gemeint, sondern ein solcher Koordinatenwert in Kombination mit der Angabe aller Flächen, durch die vor Erreichen der Bewertungsfläche gebrochen wurde. In einer bevorzugten Ausführungsform wird durch alle brechenden Flächen einschließlich der Linsenrückfläche gebrochen. In diesem Fall dient als Referenzwellenfront vorzugsweise eine sphärische Wellenfront, deren Krümmungsmittelpunkt auf der Retina des Auges 12 liegt.

Besonders bevorzugt wird ab dieser letzten Brechung nicht weiter propagiert, so dass der Krümmungsradius dieser Referenzwellenfront gerade dem Abstand zwischen Linsenrückfläche und Retina entspricht. In einer alternativen Möglichkeit wird nach der letzten Brechung noch propagiert, und zwar bevorzugt bis zur Austrittspupille AP des Auges 12. Diese liegt beispielsweise im Abstand ${d}_{AR} = {d}_{LR}^{\left(d\right)} = {d}_{LR} - {d}_{LR}^{\left(a\right)} > {d}_{LR}$ vor der Retina und damit sogar vor der Linsenrückfläche, so dass die Propagation in diesem Fall eine Rückpropagation ist (die Bezeichnungen ${d}_{LR}^{\left(a\right)} , {d}_{LR}^{\left(b\right)}$ werden weiter unten noch bei der Aufzählung der Schritte 1-6 beschrieben). Auch in diesem Fall ist die Referenzwellenfront sphärisch mit Krümmungsmittelpunkt auf der Retina, besitzt aber Krümmungsradius 1/*d_{AR}*.

Hierzu wird angenommen, dass eine sphärische Wellenfront *w₀* vom Objektpunkt ausgeht und bis zur ersten Brillenglasfläche 14 propagiert. Dort wird sie gebrochen und anschließend propagiert sie bis zur zweiten Brillenglasfläche 16, wo sie wieder gebrochen wird. Die vom Brillenglas austretenden Wellenfront *w_{g1}* propagiert anschließend entlang des Hauptstrahls in Richtung des Auges 12 (propagierte Wellenfront *w_{g2}*) bis sie auf die Cornea 18 trifft, wo sie wiederum gebrochen wird (Wellenfront *w_{c}*). Nach einer weiteren Propagation innerhalb der Augenvorderkammer bis zur Augenlinse 20, wird die Wellenfront auch von der Augenlinse 20 wiederum gebrochen, wodurch beispielsweise an der Rückfläche der Augenlinse 20 oder an der Austrittspupille des Auges die resultierenden Wellenfront *wₑ* entsteht. Diese wird mit der sphärischen Referenzwellenfront *wₛ* verglichen und die Abweichungen werden für alle Durchblickspunkte in der Zielfunktion (vorzugsweise mit entsprechenden Gewichtungen für die einzelnen Durchblickspunkte) bewertet.

Somit wird die Fehlsichtigkeit nicht mehr nur durch eine dünne sphäro-zylindrische Linse beschrieben, wie dies in vielen herkömmlichen Verfahren üblich war, sondern vorzugsweise werden die Hornhauttopographie, die Augenlinse, die Abstände im Auge und die Deformation der Wellenfront (einschließlich der Abbildungsfehler niedriger Ordnung - also Sphäre, Zylinder und Achslage - sowie vorzugsweise auch einschließlich der Abbildungsfehler höherer Ordnung) im Auge direkt berücksichtigt.

Vorzugsweise liefert eine Aberrometermessung die individuellen Wellenfrontdeformationen des realen fehlsichtigen Auges für Ferne und Nähe (Abweichungen, keine absoluten Brechwerte) und die individuellen mesopischen und photopischen Pupillendurchmesser. Aus einer Messung der Hornhauttopographie (flächenhafte Vermessung der Cornea-Vorderfläche) erhält man vorzugsweise eine individuelle reale Hornhautvorderfläche, die im Allgemeinen nahezu 75% des Gesamtbrechwertes des Auges ausmacht. In einer bevorzugten Ausführungsform ist es nicht notwendig, die Cornea-Rückfläche zu vermessen. Sie wird vorzugsweise wegen des geringen Brechzahlunterschiedes zum Kammerwasser und wegen der geringen Hornhautdicke in guter Näherung nicht durch eine separate brechende Fläche, sondern durch eine Anpassung des Brechungsindex der Cornea beschrieben.

Generell sollen in dieser Beschreibung fett gesetzte Kleinbuchstaben Vektoren und fett gesetzte Großbuchstaben Matrizen bezeichnen, wie z.B. die (2 x 2) - Vergenzmatrizen bzw. -Brechwertmatrizen $S = \left(\begin{matrix}{S}_{xx} & {S}_{xy} \\ {S}_{xy} & {S}_{yy}\end{matrix}\right) , C = \left(\begin{matrix}{C}_{xx} & {C}_{xy} \\ {C}_{xy} & {C}_{yy}\end{matrix}\right) , L = \left(\begin{matrix}{L}_{xx} & {L}_{xy} \\ {L}_{xy} & {L}_{yy}\end{matrix}\right) , 1 = \left(\begin{matrix}1 & 0 \\ 0 & 1\end{matrix}\right)$ und kursiv gesetzte wie *d* skalare Größen.

Weiterhin sollen fette, kursiv gesetzte Großbuchstaben Wellenfronten oder Flächen als Ganzes bezeichnen. So ist z.B. ***S*** die Vergenzmatrix der gleichnamigen Wellenfront ***S***, nur dass ***S*** außer den Aberrationen 2-ter Ordnung, die in ***S*** zusammengefasst sind, auch die Gesamtheit aller Aberrationen höherer Ordnung (=HOA für engl. *Higher Order Aberrations*) der Wellenfront mit umfasst. Mathematisch gesehen steht ***S*** für die Menge aller Parameter, die notwendig sind, um eine Wellenfront (ausreichend genau) in Bezug auf ein gegebenes Koordinatensystem zu beschreiben. Vorzugsweise steht ***S*** für einen Satz von Zernike-Koeffizienten mit einem Pupillenradius oder einen Satz aus Koeffizienten einer Taylorreihe. Besonders bevorzugt steht ***S*** für die Menge aus einer Vergenzmatrix ***S*** zur Beschreibung der Wellenfronteigenschaften 2. Ordnung und einem Satz von Zernike-Koeffizienten (mit einem Pupillenradius), der zur Beschreibung aller restlichen Wellenfronteigenschaften außer der 2.Ordnung dient oder einem Satz von Koeffizienten gemäß einer Zerlegung nach Taylor. Für Flächen statt Wellenfronten gelten analoge Aussagen.

Unter anderem können folgende Daten im Prinzip direkt gemessen werden:
- Die Wellenfront ***S**_{M}*, die durch den Laserspot auf der Retina und den Durchgang durch das Auge erzeugt wird (aus aberrometrischer Messung)
- Form der Hornhautvorderfläche ***C*** (durch Hornhaut-Topographie)
- Abstand zwischen Hornhaut und Linsenvorderfläche *d_{CL}* (durch Pachymetrie). Diese Größe kann auch indirekt durch die Messung des Abstandes zwischen der Hornhaut und der Regenbogenhaut ermittelt werden, dabei können gegebenenfalls Korrekturwerte angewendet werden. Derartige Korrekturen können der Abstand zwischen der Linsenvorderfläche und der Regenbogenhaut aus bekannten Augenmodellen (z.B. Literaturwerte) sein.
- Krümmung der Linsenvorderfläche in einer Richtung *L*_{1*xx*} (durch Pachymetrie) Dabei kann ohne Einschränkung der Allgemeinheit die x-Ebene beispielsweise derart definiert werden, dass dieser Schnitt in der x-Ebene liegt. Wird das Koordinatensystem so definiert, dass diese Ebene schief liegt, muss die Ableitung durch die Funktionen des entsprechenden Winkels ergänzt werden. Es wird nicht gefordert, dass es sich dabei um einen Hauptschnitt handelt. Beispielsweise kann es sich um den Schnitt in der horizontalen Ebene handeln.

Weiterhin können folgende Daten - je nach Ausführungsform - entweder gemessen oder der Literatur entnommen werden:
- Dicke der Linse *d_{L}*
- Krümmung der Linsenrückfläche in derselben Richtung wie die Linsenvorderfläche *L*_{2*,xx*} (durch Pachymetrie)

Damit gibt es für die Linsenrückfläche folgende Möglichkeiten:
- Messung von *L*_{2*,xx*} (*L*_{2*,M*}) und Annahme einer Rotationssymmetrie ${L}_{2 , xx} = {L}_{2 , yy} = {L}_{2} = {L}_{2 , M} und {L}_{2 , xy} = {L}_{2 , yx} = 0$
- Entnahme von *L*_{2*,xx*} aus der Literatur ( *L*_{2*,Lit*} ) und Annahme einer Rotationssymmetrie *L*_{2*,xx*} = *L*_{2*,yy*} = *L*₂ *= L*_{2*,M*} und *L*₂*_{,xy} = L*₂*_{,yx} =* 0
- Entnahme der vollständigen (unsymmetrischen) Form *L*₂ aus der Literatur (*L*_{2*,Lit*})
- Messung von *L*_{2*,xx*} (*L*_{2*,M*}) und Annahme eines Zylinders oder einer anderweitig spezifizierten Asymmetrie *a_{Lit}* aus der Literatur
   *L*₂*_{,xx} = L*_{2*,M*} und *L*₂*_{,xy} = L*₂*_{,yx} = f*(*L*₂*_{,xx},a_{Lit}*) sowie *L*₂*_{,yy} = g*(*L*₂*_{,xx},a_{Lit}*)

Folgende Daten können der Literatur entnommen werden:
- Brechungsindices *n_{CL}* von Hornhaut und Augenvorderkammer sowie des Kammerwassers *n_{LR}* und der der Linse *n_{L}*

Damit verbleiben insbesondere der Abstand *d_{LR}* zwischen Linsenrückfläche und Netzhaut sowie die Komponenten *L*_{1*,yy*} und *L*₁*_{,xy} = L*_{1*,yx*} der Linsenvorderfläche als unbekannte Parameter. Zur Vereinfachung des Formalismus kann ersterer auch als Vergenzmatrix **D***_{LR} = D_{LR}* · **1** mit *D_{LR} = n_{LR}*/*d_{LR}* geschrieben werden. Weiterhin wird generell die Größe *τ* verwendet, die definiert ist als *τ* = *d*/*n* (wobei für den Brechungsindex als *n* immer der entsprechende Index zu verwenden ist wie für *d* und *τ*, z.B. als *τ_{LR} = d_{LR}*/*n_{LR}*, *τ_{CL} = d_{CL}*/*n_{CL}*).

Die Modellierung des Durchgangs der Wellenfront durch das erfindungsgemäß verwendete Augenmodell, also nach dem Durchgang durch die Flächen des Brillenglases, kann in einer bevorzugten Ausführungsform, in der die Linse über eine Vorder- und eine Rückfläche beschrieben wird, wie folgt beschrieben werden, wobei die Transformationen der Vergenzmatrizen explizit angegeben wird:
1. Brechung der Wellenfront ***S*** mit der Vergenzmatrix ***S*** an der Hornhaut ***C*** mit der Flächenbrechwertmatrix **C** zur Wellenfront ***S**'_{C}* mit Vergenzmatrix ***S**'_{C} =* **S** + **C**
2. Propagation um die Vorderkammertiefe *d_{CL}* (Abstand zwischen Hornhaut und Linsenvorderfläche) zur Wellenfront ***S***_{*L*1} mit Vergenzmatrix **S**_{*L*1} = **S***'_{C}*/(1 - *τ_{CL}* · **S**') ${S}_{L 1} = \frac{S {′}_{C}}{\left(1-{τ}_{CL}⋅S{′}_{C}\right)}$
3. Brechung an der Linsenvorderfläche ***L***₁ mit der Flächenbrechwertmatrix **L**₁ zur Wellenfront ***S**'*_{*L*1} mit der Vergenzmatrix ***S**'*_{*L*1} = ***S***_{*L*1} + **L**₁
4. Propagation um die Linsendicke *d_{L}* zur Wellenfront ***S***_{*L*2} mit Vergenzmatrix ***S***_{*L*2} *= **S**'*_{*L*1}/(1 - *τ_{L}* · **S***'*_{*L*1})
5. Brechung an der Linsenrückfläche ***L***₂ mit der Flächenbrechwertmatrix **L**₂ zur Wellenfront **S***'*_{*L*2} mit Vergenzmatrix **S***'*_{*L*2} = **S**_{*L*2} +**L**₂
6. Propagation um den Abstand zwischen Linse und Netzhaut *d_{LR}* zur Wellenfront ***S**_{R}* mit der Vergenzmatrix **S***_{R}* = **S***'*_{*L*2}/(1 - *τ_{LR}* · **S***'*_{*L*2})

Jeder der Schritte 2, 4, 6, bei denen um die Abstände *τ_{CL}*, *τ_{CL}*, bzw. *τ_{CL}* propagiert wird, kann dabei aufgeteilt werden in zwei Teilpropagationen 2a,b), 4a,b) bzw. 6a,b) nach dem folgenden Schema, das für den Schritt 6a,b) explizit lautet:
6a. Propagation um den Abstand ${d}_{LR}^{\left(a\right)}$ zwischen Linse und Zwischenebene zur Wellenfront ***S**_{LR}* mit der Vergenzmatrix ${S}_{LR} = S {′}_{L 2} / \left(1-{τ}_{LR}^{\left(a\right)}S{′}_{L 2}\right)$
6b. Propagation um den Abstand ${d}_{LR}^{\left(b\right)}$ zwischen Zwischenebene und Netzhaut zur Wellenfront ***S**_{R}* mit der Vergenzmatrix ${S}_{R} = {S}_{LR} / \left(1-{τ}_{LR}^{\left(b\right)}{S}_{LR}\right)$

Dabei können ${τ}_{LR}^{\left(a\right)} = {d}_{LR}^{\left(a\right)} / {n}_{LR}^{\left(a\right)}$ und ${τ}_{LR}^{\left(b\right)} = {d}_{LR}^{\left(b\right)} / {n}_{LR}^{\left(b\right)}$ positiv oder negativ sein, wobei stets ${n}_{LR}^{\left(a\right)} = {n}_{LR}^{\left(b\right)} = {n}_{LR}$ und ${τ}_{LR}^{\left(a\right)} + {τ}_{LR}^{\left(b\right)} = {τ}_{LR}$ sein soll. In jedem Fall lassen sich Schritt 6a und 6b durch ${S}_{R} = S {′}_{L 2} / \left(1-\left({τ}_{LR}^{\left(a\right)}+{τ}_{LR}^{\left(b\right)}\right)S{′}_{L 2}\right) = S {′}_{L 2} / \left(1-{τ}_{LR}S{′}_{L 2}\right)$ wieder zusammenfassen. Die Aufteilung in Schritt 6a und 6b bietet aber Vorteile, und bevorzugt kann die Zwischenebene in die Ebene der Austrittspupille AP gelegt werden, die vorzugsweise vor der Linsenrückfläche liegt. In diesem Fall ist ${τ}_{LR}^{\left(a\right)} < 0$ und ${τ}_{LR}^{\left(b\right)} > 0$.

Analog zur Aufteilung von Schritt 6 in 6a,b) kann auch die Aufteilung der Schritte 2,4 erfolgen.

Entscheidend für die Wahl der Bewertungsfläche der Wellenfront ist also nicht nur die absolute Lage in Bezug auf die z-Koordinate (in Lichtrichtung), sondern auch die Anzahl der Flächen, durch die bis zur Bewertungsfläche schon gebrochen wurde. So kann ein- und dieselbe Ebene mehrmals durchlaufen werden. Beispielhaft wird die Ebene der AP (die normalerweise zwischen der Linsenvorderfläche und der Linsenrückfläche liegt) vom Licht formal zum ersten Mal durchlaufen nach einem gedachten Schritt 4a, bei dem von der Linsenvorderfläche um die Länge ${τ}_{L}^{\left(a\right)} > 0$ propagiert wird. Zum zweiten Mal wird die gleiche Ebene erreicht nach Schritt 6a, wenn nach der Brechung durch die Linsenrückfläche wieder zur AP-Ebene zurückpropagiert wird, d.h. ${τ}_{LR}^{\left(a\right)} = - {τ}_{L} + {τ}_{L}^{\left(a\right)} = - {τ}_{L}^{\left(b\right)} < 0$, was gleichbedeutend ist mit ${τ}_{LR}^{\left(a\right)} = {τ}_{LR} - {τ}_{LR}^{\left(b\right)} < 0$. Bei den Wellenfronten ***S**_{AP}*, die sich im Text auf die AP beziehen, soll (falls nicht explizit anders erwähnt) vorzugsweise immer die Wellenfront ***S**_{AP} = **S**_{LR}* gemeint sein, die Ergebnis von Schritt 6a ist."

Auf diese Schritte 1 bis 6 wird im weiteren Verlauf der Beschreibung immer wieder Bezug genommen. Sie beschreiben einen bevorzugten Zusammenhang zwischen der Vergenzmatrix ***S*** einer Wellenfront ***S*** an der Hornhaut und den Vergenzmatrizen aller daraus hervorgehenden Zwischenwellenfronten an den brechenden Zwischenflächen des Auges, insbesondere der Vergenzmatrix **S***'*_{*L*2} einer Wellenfront **S***'*_{*L*2} nach der Augenlinse (oder sogar einer Wellenfront ***S**_{R}* an der Netzhaut). Diese Zusammenhänge können sowohl dazu verwendet werden, a-priori nicht bekannte Parameter (z.B. *d_{LR}* oder ***L***₁) zu berechnen und so das Modell entweder individuell oder generisch mit Werten zu belegen, als auch um mit dann belegten Modellen die Ausbreitung der Wellenfront im Auge zur Optimierung von Brillengläsern zu simulieren.

In einer bevorzugten Ausführungsform werden die Flächen und Wellenfronten bis in zweiter Ordnung behandelt, wozu eine Darstellung durch Vergenzmatrizen ausreichend ist. Eine später noch beschriebene andere bevorzugte Ausführungsform berücksichtigt und nutzt auch höhere Ordnungen von Abbildungsfehlern.

In einer Beschreibung in zweiter Ordnung besitzt das Augenmodell in einer bevorzugten Ausführungsform zwölf Parameter als Freiheitsgrade des Modells, die belegt werden müssen. Diese umfassen vorzugsweise die drei Freiheitsgrade der Flächenbrechwertmatrix **C** der Cornea ***C***, die jeweils drei Freiheitsgrade der Flächenbrechwertmatrizen **L**₁ und **L**₂ für die Linsenvorder- bzw. Rückfläche, sowie jeweils einen für die Längenparameter Vorderkammertiefe *d_{CL}* , Linsendicke *d_{L}* und die Glaskörperlänge *d_{LR}*.

Belegungen dieser Parameter können im Prinzip auf mehrere Weisen erfolgen:
i) Direkte, also individuelle Messung eines Parameters
ii) A priori gegebener Wert eines Parameters, z.B. als Literaturwert oder aus einer Schätzung, beispielsweise durch Vorliegen eines Messwertes für eine andere Größe, die anhand einer vorangegangenen Populationsanalyse auf bekannte Weise mit dem zu bestimmenden Parameter korreliert
iii) Berechnung aus Konsistenzbedingungen, z.B. Verträglichkeit mit einer bekannten Refraktion

Die gesamte Anzahl *df*₂ von Freiheitsgraden des Augenmodells in zweiter Ordnung (*df* steht für ,degree of freedom', Index ,2' für 2.Ordnung) setzt sich also zusammen aus ${df}_{2} = {df}_{2} \left(i\right) + {df}_{2} \left(ii\right) + {df}_{2} \left(iii\right)$

Liegen beispielsweise für alle zwölf Modellparameter direkte Messwerte vor, dann ist *df*₂(*i*) = 12, *df*₂(*ii*) = 0 und *df*₂(*iii*) = 0, was nachfolgend der Einfachheit halber durch die Schreibweise *df*₂ = 12 + 0 + 0 ausgedrückt wird. In einem solchen Fall ist auch die objektive Refraktion des betreffenden Auges festgelegt, so dass eine objektive Refraktionsbestimmung nicht mehr zusätzlich durchgeführt werden müsste.

Für die Implementierung der vorliegenden Erfindung ist es nicht notwendig, alle Parameter direkt zu messen. So ist es unter Umständen einfacher, die Refraktion des betreffenden Auges zu messen bzw. objektiv und/oder subjektiv zu bestimmen, als alle Parameter des Modellauges individuell zu vermessen. Vorzugsweise liegt somit zumindest eine Refraktion, also Messdaten zur Wellenfront ***S**_{M}* des Auges bis zur zweiten Ordnung vor, die den Daten der Vergenzmatrix **S***_{M}* entsprechen. Bei einer Belegung des Augenmodells auf Basis rein objektiv gemessener Daten können diese Werte aberrometrischen Messungen oder autorefraktometrischen Messungen entnommen werden, bzw. laut (ii) anderweitig gegebener Daten belegt werden. Eine Berücksichtigung subjektiver Verfahren (d.h. subjektive Refraktion), sei es als Ersatz der objektiven Messung der Refraktion oder durch die Kombination beider Ergebnisse, wird später noch beschrieben. Die drei Bedingungen der Übereinstimmung mit den drei unabhängigen Parametern der Vergenzmatrix **S***_{M}* erlauben es damit, drei Parameter des Augenmodells abzuleiten, was in der oben eingeführten Notation *df*₂(*iii*) = 3 entspricht.

Es ist also möglich, in Fällen, in denen nicht alle Modellparameter direkten Messungen zugänglich sind, oder diese Messungen sehr aufwändig wären, die fehlenden Parameter sinnvoll zu belegen. Liegen beispielsweise höchstens für neun Modellparameter direkte Messwerte vor (*df*₂(*i*) ≤ 9), dann kann man die genannten Bedingungen der Refraktion benutzen, um drei der Modellparameter zu berechnen (*df*₂(*iii*) = 3). Falls genau *df*₂(*i*) = 9 gilt, dann sind alle zwölf Modellparameter durch die Messungen und die Berechnung eindeutig bestimmt, und es gilt (*df*₂(*ii*) *=* 0). Ist dagegen *df*₂(*i*) < 9, dann ist *df*₂(*ii*) = 9 - *df*₂(*i*) > 0 , d.h. das Modell ist unterbestimmt in dem Sinne, dass *df*₂(*ii*) Parameter a priori festgelegt werden müssen.

Mit dem Bereitstellen einer individuellen Refraktion, also Messdaten zur Wellenfront ***S**_{M}* des Auges insbesondere bis zur zweiten Ordnung liegen die nötigen Daten der Vergenzmatrix **S***_{M}* entsprechend vor. Gemäß einem in WO 2013/104548 A1 beschriebenen Verfahren werden insbesondere die Parameter {**C**, *d_{CL},* **S***_{M}*} gemessen. Hingegen werden herkömmlicherweise unter anderem die beiden Längenparameter *d**_{L}*** und *d**_{LR}*** (bzw. *D**_{LR}***) a priori festgelegt (z.B. durch Literaturwerte oder Schätzung). In WO 2013/104548 A1 werden insbesondere die beiden Fälle unterschieden, in denen entweder **L₂** a priori festgelegt und **L₁** daraus berechnet wird, oder umgekehrt. Als Berechnungsvorschrift offenbart die genannte Offenlegungsschrift hierzu Gl.(4) bzw. Gl.(5). Für beide Fälle gilt *df*₂ = 4 + 5 + 3.

In der Bezeichnungsweise der oben genannten Schritte 1 bis 6 geschieht die Anpassung von **L₁** an die Messungen insbesondere dadurch, dass man zum einen die gemessene Vergenzmatrix **S***_{M}* mittels der Schritte 1, 2 durch die ebenfalls gemessene Matrix **C** hindurch rechnet und bis zur objektseitigen Seite der Linsenvorderfläche propagiert. Zum anderen rechnet man von einer gedachten punktförmigen Lichtquelle auf der Netzhaut eine Kugelwelle mittels der rückwärts durchlaufenen Schritte 6, 5, 4 von hinten nach vorne, indem man diese Kugelwelle an der zuvor festgelegten Flächenbrechwertmatrix **L**₂ der Linsenrückfläche bricht und die dann erhaltene Wellenfront von der Linsenrückfläche bis zur bildseitigen Seite der Linsenvorderfläche propagiert. Die Differenz der so bestimmten Vergenzmatrizen **S**_{*L*1} und **S***'*_{*L*1}, die objektseitig bzw. bildseitig der Linsenvorderfläche liegen muss durch die Matrix **L**₁ bewirkt worden sein, denn bei der aberrometrischen Messung geht die gemessene Wellenfront aus einer Wellenfront hervor, die von einem Punkt auf der Netzhaut ausgeht, und deshalb aufgrund der Umkehrbarkeit der Strahlengänge identisch mit derjenigen einfallenden Wellenfront ist (S = **S***_{M}*), die auf diesen Punkt der Netzhaut zusammenläuft. Dies führt zu Gleichung (4) in der genannten Offenlegungsschrift: ${L}_{1} \left({D}_{LR}\right) = \frac{{D}_{LR} ⋅ 1 - {L}_{2}}{1 + {τ}_{L} ⋅ \left({D}_{LR}⋅1-{L}_{2}\right)} - \frac{{S}_{M} + C}{1 - {τ}_{CL} \left({S}_{M}+C\right)}$

Der andere Fall in der genannten Offenlegungsschrift betrifft die Anpassung der Matrix **L**₂ an die Messungen, nachdem die Matrix **L**₁ festgelegt worden ist. Ein Unterschied besteht jetzt lediglich darin, dass die gemessene Wellenfront **S***_{M}* den Schritten 1, 2, 3, 4 unterzogen wird und die angenommene Wellenfront aus der punktförmigen Lichtquelle nur dem Schritt 6, und dass der zur Anpassung der Linsenrückfläche **L**₂ zu erfolgende fehlende Schritt jetzt Schritt 5 ist, entsprechend Gl.(5) der genannten Offenlegungsschrift: ${L}_{2} = {D}_{LR} - \left(\frac{{S}_{M} + C}{1 - {τ}_{CL} \left({S}_{M}+C\right)}+{L}_{1}\right) {\left(1-{τ}_{L}\left(\frac{{S}_{M} + C}{1 - {τ}_{CL} \left({S}_{M}+C\right)}+{L}_{1}\right)\right)}^{- 1}$

In einer bevorzugten Implementierung der Erfindung wird zumindest einer der Längenparameter *d_{L}* und *d_{LR}* (bzw. *D**_{LR}***) aus anderen gemessenen Daten und a-priori-Annahmen zu anderen Freiheitsgraden berechnet und insbesondere nicht selbst a-priori angenommen.

Vorzugsweise stehen die Daten der Vergenzmatrix **S***_{M}* und besonders bevorzugt auch die Daten zu C aus individuellen Messungen zur Verfügung. In einer weiteren bevorzugten Ausführungsform wird bei einer Annahme von Daten zur Linsenrückfläche von einer sphärischen Rückfläche, d.h. einer Rückfläche ohne astigmatische Komponenten ausgegangen.

In einer bevorzugten Ausführungsform der Erfindung liegen also zur Cornea ***C*** Messdaten bis zur zweiten Ordnung vor, die den Daten der Flächenbrechwertmatrix **C** entsprechen. Obgleich diese Werte topographischen Messungen entnommen werden können, sind letztere nicht notwendig. Vielmehr sind topometrische Messungen ausreichend. Diese Situation entspricht dem Fall *df*₂ = 3 + 6 + 3, wobei insbesondere die Vorderkammertiefe *d_{CL}* einer der sechs a priori festzulegenden Parameter ist.

Soweit keine weiteren individuellen Messungen vorgenommen werden, liegt eine Situation mit *df*₂ = 3 + 6 + 3 vor. Um *d_{LR}* eindeutig bestimmen zu können, müssen also sechs Parameter aus {**L**₁*,***L**₂*,d_{L},d_{CL}*} durch Annahmen bzw. Literaturwerte belegt werden. Die übrigen beiden ergeben sich zusätzlich zu *d_{LR}* aus der Rechnung. In einer bevorzugten Ausführungsform werden die Parameter der Linsenrückfläche, die mittlere Krümmung der Linsenvorderfläche und die beiden Längenparameter *d_{L}* und *d_{CL}* a priori (als vorgegebene Standardwerte) belegt.

In einer bevorzugten Implementierung ist zusätzlich die Vorderkammertiefe *d_{CL}* also der Abstand zwischen der Hornhaut und Linsenvorderfläche, beispielsweise aus pachymetrischen oder OCT-Messungen bekannt. Damit umfassen die gemessenen Parameter {**C***,d_{CL},***S***_{M}*}. Diese Situation entspricht dem Fall *df*₂ = 4 + 5 + 3. Das Problem ist demnach mathematisch noch unterbestimmt, es müssen also fünf Parameter aus {**L**₁, **L**₂, *d_{L}*} durch Annahmen bzw. Literaturwerte a priori festgelegt werden. Hierbei handelt es sich in einer bevorzugten Ausführungsform um die Parameter der Linsenrückfläche, die mittlere Krümmung der Linsenvorderfläche und die Linsendicke. Der genaue Rechenweg für diesen Fall dargestellt weiter unten noch dargelegt.

Allein für die Genauigkeit der individuellen Anpassung ist es von Vorteil, möglichst viele Parameter mit individuellen Messungen belegen zu können. In einer bevorzugten Ausführungsform wird dazu zusätzlich die Linsenkrümmung in einem Normalschnitt auf Basis einer individuellen Messung bereitgestellt. Dadurch ergibt sich dann eine Situation gemäß *df*₂ = 5 + 4 + 3 , und es reicht aus, vier Parameter aus {*L*₁*_{yy}, α*_{*L*1}*,* **L**₂, *d_{L}*} a priori festzulegen. Auch hier handelt es sich in einer bevorzugten Ausführungsform wieder um die Parameter der Linsenrückfläche und die Linsendicke. Die genaue Durchrechnung wieder weiter unten noch beschrieben.

Insbesondere alternativ zum Normalschnitt der Linsenvorderfläche und besonders bevorzugt zusätzlich zur Vorderkammertiefe kann auch die Linsendicke aus einer individuellen Messung zur Verfügung gestellt werden. Dadurch entfällt die Notwendigkeit, diesen Parameter mit Modelldaten oder Schätzparametern zu belegen ( *df*₂ = 5 + 4 + 3 ). Ansonsten gilt das oben bereits ausgeführte. Diese Ausführungsform ist besonders vorteilhaft, wenn ein Pachymeter eingesetzt wird, dessen Messtiefe die Erkennung der Linsenrückfläche erlaubt, nicht aber eine hinreichend sichere Bestimmung der Linsenkrümmungen.

Zusätzlich zur Vorderkammertiefe und einem Normalschnitt der Linsenvorderfläche können in einer bevorzugten Ausführungsform ein (z.B. Messung in zwei Normalschnitten) oder zwei weitere Parameter (Messung beider Hauptschnitte und der Achslage) der Linsenvorderfläche durch eine individuelle Messung erfasst werden. Diese zusätzlichen Informationen können insbesondere auf zwei Arten ausgenutzt werden:
- Aufgabe von a priori Annahmen: Es können ein bzw. zwei der ansonsten a priori getroffenen Annahmen aufgegeben und aus durch Berechnung bestimmt werden. In diesem Fall ergeben sich die Situationen *df*₂ = 6 + 3 + 3 bzw. *df*₂ = 7 + 2 + 3. So kann im ersten Fall die mittlere Krümmung der Rückfläche (bei Annahme einer astigmatismusfreien Rückfläche) und im zweiten Fall bei gegebener mittlerer Krümmung der Flächenastigmatismus (incl. Achslage) bestimmt werden. Alternativ kann in beiden Fällen auch die Linsendicke aus den Messungen bestimmt werden.
   Ein derartiges Vorgehen bedarf jedoch im Allgemeinen einer gewissen Umsicht, da verrauschte Messdaten leicht zu einem "Weglaufen" der freigegebenen Parameter führen können. Dadurch kann das Modell insgesamt deutlich schlechter anstatt besser werden. Eine Möglichkeit dies zu verhindern besteht darin, anatomisch sinnvolle Grenzwerte für diese Parameter vorzugeben und die Variation der Parameter auf diesen Bereich zu beschränken. Selbstverständlich können diese Grenzen auch abhängig von den gemessenen Werten vorgegeben werden.
- Verringerung der Messunsicherheit: Werden dagegen weiterhin die gleichen a priori Annahmen getroffen (vorzugsweise also {**L**₂, *d_{L}*}, liegen die Situationen *df*₂ = 6 + 4 + 3 bzw. *df*₂ = 7 + 4 + 3 vor, das System ist also mathematisch überbestimmt.
   Anstelle einer einfachen analytischen Bestimmung von *D_{LR}* gemäß nachfolgender Ausführungen wird *D_{LR}* (und gegebenenfalls der noch fehlende Parameter aus **L**₁) so bestimmt ("fit"), dass der Abstand zwischen dem sich aus den Gleichungen ergebenden **L**₁ und dem gemessenen **L**₁ (bzw. dem um den fehlenden Parameter ergänzten gemessenen **L**₁) minimal wird. Durch dieses Vorgehen kann - offensichtlich - eine Verringerung der Messunsicherheit erreicht werden.

In einem weiteren bevorzugten Ansatz werden die Vorderkammertiefe, zwei oder drei Parameter der Linsenvorderfläche und die Linsendicke individuell gemessen. Die Berechnung der übrigen Größen erfolgt dabei analog, wobei die a priori Annahme der Linsendicke durch die entsprechende Messung ersetzt werden kann.

In einem weiteren bevorzugten Ansatz werden individuelle Messungen der Vorderkammertiefe, mindestens eines Parameters der Linsenvorderfläche, der Linsendicke und mindestens eines Parameter der Linsenrückfläche bereitgestellt. Hierbei handelt es sich um eine Ergänzung der oben genannten Fälle. Die jeweiligen zusätzlich gemessenen Parameter können analog den schrittweisen Erweiterungen der obigen Abschnitte erfolgen. Diese Fälle sind besonders vorteilhaft, wenn die oben erwähnten Pachymetrieeinheiten, die in einer Ebene, zwei Ebenen oder über die ganze Fläche messen in der Messtiefe entsprechend erweitert und so präzise sind, dass sich die Krümmungsdaten hinreichend genau ermitteln lassen.

Nachfolgend wird anhand einiger Beispiele gezeigt, wie die Berechnung einzelner Parameter aus den übrigen gemessenen oder a priori festgelegten Parametern und anhand der individuellen Refraktionsdaten erfolgen kann.

Beispielsweise ist in bevorzugten Ausführungsformen eine Messung der Krümmung einer Linsenfläche in einem Normalschnitt verfügbar. Da die Rückfläche in der Praxis nicht gemessen werden kann, ohne dass auch die Vorderfläche gemessen wird, und die Messung der Vorderfläche bevorzugt stattfindet, werden nachfolgend die Gleichungen für die Fälle einer in einem Normalschnitt bekannten Krümmung der Linsenvorderfläche angegeben. Ist statt eines Normalschnittes der Linsenvorderfläche ein Normalschnitt der Linsenrückfläche gegeben (z.B. entsprechende Messungen, Modellannahmen), muss in analoger Weise mit GI.(1b) verfahren werden. Ohne Beschränkung der Allgemeinheit legt man das Koordinatensystem so, dass der Normalschnitt in x -Richtung verläuft. In einem nächsten Schritt wertet man dann die Matrixgleichung (1a) in dem gegebenen Normalschnitt aus und löst nach *D_{LR}* auf, und setzt diese Lösung anschließend wieder in Gl.(1a) ein zur vollständigen Angabe von **L**₁.

Setzt man die xx -Komponente von **L**₁(*D_{LR}*) aus Gl. (1) dem gemessenen Wert *L*_{1*,xx*} gleich, erhält man für dieses Matrixelement eine in *D_{LR}* quadratische Gleichung, deren positive Lösung dem Abstand zwischen Linsenrückfläche und Netzhaut entspricht: ${D}_{LR} = \frac{- b + \sqrt{{b}^{2} - 4 c}}{2 a}$

Dabei gelten: $\begin{matrix}a = {τ}_{L} \left(1+{τ}_{L}A\right) \\ b = 1 - {τ}_{L} \left(tr\left({L}_{2}\right)-AB\right) \\ c = A - {L}_{2 , xx} + {τ}_{L} det {L}_{2} \left(1+{τ}_{L}A\right) - {τ}_{L} A tr \left({L}_{2}\right) \\ = A - {L}_{2 , xx} + a det {L}_{2} - {τ}_{L} A tr \left({L}_{2}\right)\end{matrix}$ mit $\begin{matrix}A = - {S}_{M . L 1 . xx} - {L}_{1 . xx} \\ B = 2 - {τ}_{L} tr \left({L}_{2}\right) \\ det \left({L}_{2}\right) = {L}_{2 . xx} {L}_{2 . yy} - {L}_{2 . xy}^{2} \\ tr \left({L}_{2}\right) = {L}_{2 . xx} + {L}_{2 . yy}\end{matrix}$ sowie $\begin{matrix}{S}_{M . L 1 . xx} = \frac{{τ}_{CL} S {′}_{M . C . xy}^{2} + S {′}_{M . C . xx} ⋅ \left(1-{τ}_{CL}S{′}_{M . C . yy}\right)}{- {τ}_{CL}^{2} S {′}_{M . C . xy}^{2} + \left(1-{τ}_{CL}S{′}_{M . C . xx}\right) ⋅ \left(1-{τ}_{CL}S{′}_{M . C . yy}\right)} \\ S {′}_{M . C . xx} = {S}_{M . xx} + {C}_{xx} \left(xy und yy analog\right)\end{matrix}$

Für den Fall einer symmetrischen Linsenrückfläche (**L**₂ = *L*_{2*,xx*} · 1) vereinfacht sich dies zu: ${D}_{LR} = {L}_{2 , xx} + \frac{{L}_{1 , xx} + {S}_{M , L 1 , xx}}{1 - {τ}_{L} ⋅ \left({L}_{1 , xx}+{S}_{M , L 1 , xx}\right)}$ mit *S*_{*M,L*1*,xx*} aus Gleichung (2c).

In beiden Fällen ist es damit möglich, die Linsenvorderfläche ***L***₁ zu berechnen, indem man das jeweilige gewonnene *D_{LR}* in Gleichung (1a) einsetzt: ${L}_{1} = \frac{{D}_{LR} - {L}_{2}}{1 + {τ}_{L} ⋅ \left({D}_{LR}-{L}_{2}\right)} - \frac{{S}_{M} + C}{1 - {τ}_{CL} \left({S}_{M}+C\right)}$

Das Ergebnis ist naturgemäß symmetrisch (*L*₁*_{,xy} = L*_{1*,yx*}) und reproduziert für die Komponente *L*_{1*,xx*} den in (2b) bzw. (3) eingesetzten Wert.

In einigen bevorzugten Ausführungsformen steht eine individuelle Messung oder eine Vorgabe einer mittleren Krümmung einer Linsenfläche zur Verfügung. Diese Situation liegt beispielsweise dann vor, wenn die mittlere Krümmung der Linsenvorderfläche gemessen werden kann oder keine Messungen an den Linsenflächen durchgeführt werden können und die mittlere Krümmung einer Linsenfläche angenommen wird (z.B. aus der Literatur entnommen). Wie soeben wird auch hier das Verfahren für die Linsenvorderfläche beschrieben und ist analog auf die Linsenrückfläche übertragbar.

Im diesem Fall einer gegebenen mittleren Sphäre *L*_{1*,ms*} der Linsenvorderfläche sind die freien Parameter der Zylinder *L*_{1*,cyl*} und die Achslage *α*_{*L*1} . Mit *L*₁*_{,diff} = L*_{1*,cyl*}/**2** wird **L**₁ zu ${L}_{1} = \left(\begin{matrix}{L}_{1 , ms} - {L}_{1 , diff} ⋅ cos 2 {α}_{L 1} & - {L}_{1 , diff} ⋅ sin 2 {α}_{L 1} \\ - {L}_{1 , diff} ⋅ sin 2 {α}_{L 1} & {L}_{1 , ms} + {L}_{1 , diff} ⋅ cos 2 {α}_{L 1}\end{matrix}\right)$

Auch geht man wieder von GI.(1a) aus. Setzt man nun die Ausdrücke für **L**₁ aus den Gleichungen (5) und (1a) gleich, erhält man ein Gleichungssystem aus drei Gleichungen (die beiden Nichtdiagonalelemente sind identisch) und den drei Unbekannten *L*_{1*,diff*}, *α*_{*L*1} und *D_{LR}*. Dieses hat die physikalisch relevante Lösung $\begin{matrix}{D}_{LR} = \frac{- \overline{b} + \sqrt{{\overline{b}}^{2} - 4 \overline{a} \overline{c}}}{2 \overline{a}} \\ {L}_{1 diff} = \pm \sqrt{{σ}^{2} + {γ}^{2}} \\ {α}_{L 1} = \frac{1}{2} arctan \left(\pm γ,\pm σ\right) + \frac{π}{2}\end{matrix}$ mit $\overline{a} = {τ}_{L} \left(1+{τ}_{L}\overline{A}\right)$ $\overline{b} = 1 - {τ}_{L} \left(tr\left({L}_{2}\right)-\overline{A}B\right)$ $\overline{c} = \frac{1}{4} \left(\overline{A}{B}^{2}-B tr\left({L}_{2}\right)-\overline{a} Ast{\left({L}_{2}\right)}^{2}\right)$ und $\overline{A} = {\overline{S}}_{M , L 1} - {\overline{L}}_{1 , mess}$ $Ast \left({L}_{2}\right) = \sqrt{tr {\left({L}_{2}\right)}^{2} - 4 det {L}_{2}}$ $\begin{matrix}γ = \frac{2 \left(-1+\sqrt{{\overline{b}}^{2} - 4 \overline{a} \overline{c}}\right) \left({L}_{2 . xx}-{L}_{2 . yy}\right) + {τ}_{L}^{2} Ast {\left({L}_{2}\right)}^{2} \left({S}_{M . L 1 . xx}-{S}_{M . L 1 . yy}\right)}{2 {τ}_{L}^{2} Ast {\left({L}_{2}\right)}^{2}} \\ σ = \frac{2 \left(-1+\sqrt{{\overline{b}}^{2} - 4 \overline{a} \overline{c}}\right) {L}_{2 , xy} + {τ}_{L}^{2} Ast {\left({L}_{2}\right)}^{2} {S}_{M . L 1 . xy}}{2 {τ}_{L}^{2} Ast {\left({L}_{2}\right)}^{2}}\end{matrix}$

Auch dies lässt sich für den Fall einer rotationssymmetrischen Linsenrückfläche vereinfachen: $\begin{matrix}{D}_{LR} = {L}_{2} + \frac{{\overline{L}}_{1 . mess} + {\overline{S}}_{M . L 1}}{1 - {τ}_{L} ⋅ \left({\overline{L}}_{1 , mess}+{\overline{S}}_{M , L 1}\right)} \\ {L}_{1} = \left({\overline{L}}_{1 , mess}+{\overline{S}}_{M , L 1}\right) ⋅ 1 - \frac{{S}_{M} + C}{1 - {τ}_{CL} \left({S}_{M}+C\right)}\end{matrix}$ wobei ${\overline{L}}_{1 , mess} = \frac{{D}_{LR} - {L}_{2}}{1 + {τ}_{L} ⋅ \left({D}_{LR}-{L}_{2}\right)} - {\overline{S}}_{M , L 1}$ mit ${\overline{S}}_{M , L 1} = \frac{{S}_{M , L 1 , xx} + {S}_{M , L 1 , yy}}{2}$

Damit sind die einzelnen Elemente des Augenmodells vollständig berechenbar.

Bei den gegebenen (d.h. gemessenen bzw. angenommenen) Größen kann es sich außer um einen Hauptschnitt mit gegebener Winkelstellung bzw. der mittleren Krümmung auch um andere Parameter wie den stärksten Hauptschnitt, den schwächsten Hauptschnitt, den Zylinder und die Achslage handeln. Das Vorgehen ist in diesen Fällen analog zu den geschilderten Fällen.

Da inzwischen auch die HOA des Auges bei der Optimierung von Brillengläsern berücksichtigt werden, ist es vorteilhaft, bei der Belegung des Augenmodells auch die HOA der Hornhaut bzw. der Linse zu betrachten. Bei der Wahl von HOA für die Linse gilt generell, dass der Linsenvorder- bzw. Rückfläche HOA zugeordnet werden können, die auch den Brechungsindexverlauf innerhalb der Linse abbilden können.

Vorzugsweise wird der bisher dargestellte Formalismus insbesondere hinsichtlich der genannten Schritte 1 bis 6 auf die Mitbehandlung der HOA erweitert, indem außer den in Schritt 1 bis 6 explizit angegebenen Formeln für die Vergenzmatrizen die Berechnungsverfahren aus den Publikationen von G. Esser et al.: "Derivation of the refraction equations for higher order aberrations of local wavefronts at oblique incidence", JOSA A, Vol. 27, No. 2 (2010) und von G. Esser et al.: "Derivation of the propagation equations for higher order aberrations of local wavefronts, JOSA A, Vol. 28, No. 11 (2011)" angewendet werden.

Generell ist das Vorgehen in Bezug auf das Abzählen von Freiheitsgraden sehr ähnlich wie oben ausgeführt. Liegen zur brechenden Fläche ***C*** der Hornhaut und zur austretenden Wellenfront ***S**_{M}* außer Daten zu Fehlern 2. Ordnung auch Daten über deren HOA vor (entweder aus Messungen oder aus sinnvollen Annahmen), dann kann auch die Wellenfront ***S***_{*L*1} mit entsprechend vielen HOA rechnerisch bestimmt werden. Dies gilt unabhängig von der Darstellungsform der HOA. Besonders bevorzugt ist allerdings die Taylorreihe, denn in dieser Form gilt exakt die Aussage: Sind zu beiden Flächen ***C*** und ***S**_{M}* HOA-Koeffizienten bis zur Ordnung n gegeben, dann lassen sich auch die entsprechenden HOA-Koeffizienten für ***S***_{*L*1} bis zur Ordnung *n* daraus rechnerisch bestimmen. Weiterhin bevorzugt ist die Zernike-Basis, denn auch hier gilt eine ähnliche Aussage. Exakt ist diese allerdings nur dann, wenn alle Zernike-Koeffizienten mit einer Ordnung > *n* verschwinden.

Vorzugsweise wird (vorab) eine Ordnung *n* festgelegt, bis zu der alle beteiligten Flächen und Wellenfronten behandelt werden sollen. Unabhängig von der Darstellung der HOA besitzen die Wellenfronten oder Flächen dann außer den drei Komponenten für die Fehler 2.Ordnung noch *N* Komponenten für die HOA, wobei *N* von *n* und i.a. von der Darstellungsform der HOA abhängt (In der Taylor- und Zernike-Zerlegung gilt *N* = (*n* + 1)(*n* + 2)/2 - 6 )

Entsprechend besitzt dann auch die Anpassungsbedingung anhand einer gemessenen Wellenfront, z.B. ***S***_{*M,L*1}, nicht mehr nur die oben beschriebenen drei Komponenten, sondern insgesamt maximal *N* + 3 Komponenten. Diesen stehen dann entsprechend 3 (*N* + 3) + 3 = 3N + 12 Parameter gegenüber (nämlich die drei Längenparameter *d_{CL}, d_{L}* und *d_{LR}* (bzw. *D**_{LR}***) sowie je N + 3 Komponenten von der Cornea C und den Linsenflächen ***L***₁ und ***L***₂). Das bedeutet, es gilt: $\begin{matrix}{df}_{n} & = {df}_{n} \left(i\right) + {df}_{n} \left(ii\right) + {df}_{n} \left(iii\right) \\ & = 3 N + 12\end{matrix}$ mit *dfₙ*(*iii*) *= N +* 3. Werden wieder bevorzugt die Vorderkammertiefe *d_{CL}* und die Cornea ***C*** gemessen, gilt *dfₙ*(*i*) *= N* + 4 und folglich *dfₙ*(*ii*) *= N* + 5, entsprechend der Situation *dfₙ =* (*N +* 4) *+* (*N +* 5) + (*N +* 3).

Das weitere Vorgehen kann ganz analog zum oben beschriebenen durchgeführt werden.

Bei der dem hier beschriebenen Vorgehen zu Grunde liegenden Messvorrichtung können mit der Aberrometrieeinheit die HOA der Abbildung des Auges auf die Netzhaut in Transmission erfasst werden. Ferner können mit der gleichen Vorrichtung durch die Topographieeinheit die HOA der Hornhaut-Oberfläche in Reflexion gemessen werden. Damit stehen sowohl die austretende Wellenfront ***S**_{M}* als auch die brechende Fläche ***C*** der Hornhaut, inklusive der HOA bis zu einer bestimmten Ordnung *n* zur Verfügung. Die Wellenfront ***S**_{M}* liefert *dfₙ*(*iii*) *= N* + 3 Bedingungen zur Parameterberechnung. Wird wieder bevorzugt, außer der Cornea ***C*** auch die Vorderkammertiefe *d_{CL},* gemessen, gilt *dfₙ*(*i*) *= N* + 4 und folglich ist *dfₙ*(*ii*) *= N +* 5, entsprechend der Situation *dfₙ =* (*N +* 4) *+* (*N +* 5) + (*N* + 3)

In einer bevorzugten Ausführungsform der Erfindung können nun bei der Belegung des Modells die HOA der Linse so gewählt werden, dass bei der Propagation einer von einem Punkt der Netzhaut ausgehenden Wellenfront gemäß den Schritten 1 bis 6 in umgekehrter Reihenfolge die gemessene Wellenfront entsteht. Sind die Parameter des Augenmodell dann belegt, kann die Propagation dieser von einem Punkt der Netzhaut ausgehenden Wellenfront bis hin zur Bewertungsfläche (gemäß zumindest einiger der Schritte 1 bis 6 in umgekehrter Reihenfolge) zur Referenzwellenfront führen, die erfindungsgemäß für einen Vergleich mit der von einem Objekt ausgehenden Wellenfront herangezogen wird.

In einer beispielhaften Implementierung wird analog zu dem oben mit Bezug auf WO 2013/104548 A1 beschriebenen Verfahren bei der Anpassung von **L**₁ vorgegangen, wobei die beiden Längenparameter *d_{L}* und *d_{LR}* (bzw. *D_{LR}* ) a priori festgelegt werden. Der einzige Unterschied ist jetzt, dass die Linsenvorderfläche ***L***₁ inklusive ihrer *N* HOA-Parameter bis zur Ordnung *n* an die Messungen angepasst werden, entsprechend *dfₙ*(*iii*) *= N* + 3. Die durch Mangel an Messwerten unbekannte Linsenrückfläche ***L***₂ wird vorzugsweise inklusive der *N* HOA-Parameter bis zur Ordnung *n* vorab festgelegt (z.B. durch Literaturwerte über das Durchschnitts-Auge der Bevölkerung), entsprechend *dfₙ*(*ii*) *= N+*5. Dies geschieht insbesondere dadurch, dass man zum einen die gemessene Wellenfront ***S**_{M}* mittels der Schritte 1,2 durch die ebenfalls gemessene Hornhaut ***C*** hindurch rechnet und bis zur objektseitigen Seite der Linsenvorderfläche ***L***₁ propagiert. Zum anderen rechnet man von einer gedachten punktförmigen Lichtquelle auf der Netzhaut eine Kugelwelle mittels der rückwärts durchlaufenen Schritte 6,5,4 von hinten nach vorne, indem man diese Kugelwelle an der zuvor festgelegten Linsenrückfläche ***L***₂ bricht und die dann erhaltene Wellenfront von der Linsenrückfläche bis zur bildseitigen Seite der Linsenvorderfläche ***L***₁ propagiert. Die so bestimmten zwei Wellenfronten ***S***_{*L*1} und ***S***'_{*L*1}, die objektseitig bzw. bildseitig der Linsenvorderfläche liegen, besitzen im allgemeinen sowohl Abbildungsfehler niedriger Ordnung als auch HOA, deren Werte sich jedoch zwischen den beiden Wellenfronten unterscheiden. Da die beiden Wellenfronten in ein- und demselben Messstrahlengang vorkommen und daher über den noch fehlenden Schritt 3 zusammenhängen müssen, kann aus dieser Differenz auf eindeutige Weise bis zur Ordnung *n* auf die brechende Linsenvorderfläche ***L***₁ rückgeschlossen werden, und zwar beispielsweise durch die aus G. Esser et al.: "Derivation of the refraction equations for higher order aberrations of local wavefronts at oblique incidence", JOSA A, Vol. 27, No. 2 (2010) und aus G. Esser et al.: "Derivation of the propagation equations for higher order aberrations of local wavefronts, JOSA A, Vol. 28, No. 11 (2011)" bekannten Berechnungsmethoden.

In einer anderen beispielhaften Implementierung wird wiederum analog zu dem oben mit Bezug auf WO 2013/104548 A1 beschriebenen Verfahren bei der Anpassung von **L**₂ vorgegangen, wobei wiederum die beiden Längenparameter *d_{L}* und *d_{LR}* (bzw. *D_{LR}* ) a priori festgelegt werden. Jetzt wird die Linsenrückfläche ***L***₂ inklusive ihrer HOA bis zur Ordnung *n* an die Messungen angepasst, nachdem die Linsenvorderfläche ***L***₁ festgelegt worden ist. Ein Unterschied zur Anpassung von ***L***₁ besteht insbesondere darin, dass die gemessene Wellenfront ***S**_{M}* den Schritten 1,2,3,4 unterzogen wird und die angenommene Wellenfront aus der punktförmigen Lichtquelle nur dem Schritt 6, und dass der zur Anpassung der Linsenrückfläche ***L***₂ zu erfolgende fehlende Schritt jetzt Schritt 5 ist.

Zur Durchrechnung bedient man sich dabei beispielsweise der in G. Esser et al.: "Derivation of the refraction equations for higher order aberrations of local wavefronts at oblique incidence", JOSA A, Vol. 27, No. 2 (2010) und in G. Esser et al.: "Derivation of the propagation equations for higher order aberrations of local wavefronts, JOSA A, Vol. 28, No. 11 (2011)" beschriebenen Formalismen für die Brechungs- bzw. Propagationsschritte. Insbesondere ist es sinnvoll, sich von den Abbildungsfehlern der niedrigsten Ordnung zur höchsten interessierenden Ordnung (typischerweise sechste) vorzuarbeiten.

Zur Verwendung der besagten Formalismen ist es vorteilhaft, die Wellenfronten bzw. Flächen durch die lokale Ableitung der Pfeilhöhe in Richtung der zur Ausbreitungsrichtung senkrechten Ebenen zu beschreiben. Jede Fläche oder Wellenfront, die nicht in dieser Form vorliegt, wird vorzugsweise zunächst auf diese Form gebracht. Dies kann beispielsweise durch Transformation von einer Zernike-Darstellung auf die Darstellung durch lokale Ableitungen geschehen, oder durch einen noch vorangehenden Fit einer Pfeilhöhendarstellung. Eine geeignete technische Darstellungsform von Flächen durch Taylorkoeffizienten ist beispielsweise in WO 2013/104548 A1 beschrieben.

Natürlich können analog zum obigen Vorgehen die Abweichungen (einschließlich den Abbildungsfehlern zweiter Ordnung) auch auf die Linsenvorder- und die Linsenrückfläche verteilt werden.

In einer bevorzugten Ausführungsform wird vorgeschlagen, dass zumindest einer der Längenparameter *d_{L}* und *d_{LR}* weder a-priori vorgegeben noch individuell gemessen, sondern anhand der individuellen Refraktionsdaten und der sonstigen (vorab) festgelegten Daten berechnet wird. Dazu wird insbesondere für einen der Freiheitsgrade der Linsenflächen ***L***₁ oder ***L***₂ zumindest ein Messwert oder eine Annahme bereitgestellt. Ist dies z.B. ein Messwert für die Krümmung von ***L***₁ in einem Normalschnitt, dann kann insbesondere *d_{LR}* (bzw. *D**_{LR}***) daraus durch Berechnung bestimmt werden.

Bezieht sich die Angabe in den Vergenzmatrizen auf die lokale Krümmung (dies entspricht der Angabe der HOA als Koeffizienten einer Zerlegung nach Taylor), werden dazu zuerst wie in oben bereits beschrieben *D_{LR}* und die fehlenden Parameter der Linse bestimmt. Im Anschluss daran können dann mit dem Formalismus aus G. Esser et al.: "Derivation of the refraction equations for higher order aberrations of local wavefronts at oblique incidence", JOSA A, Vol. 27, No. 2 (2010) und von G. Esser et al.: "Derivation of the propagation equations for higher order aberrations of local wavefronts, JOSA A, Vol. 28, No. 11 (2011)" schrittweise die HOA der Linse ausgehend von der zweiten bis zur n-ten Ordnung aufgebaut werden.

Werden dagegen die mittlere Krümmung über eine bestimmte Pupille verwendet, was beispielsweise bei der Darstellung nach Zernike der Fall ist, ist der Freiheitsgrad *D_{LR}* ebenso festgelegt. In diesem Formalismus wäre aufgrund der Abhängigkeiten ein iteratives Vorgehen notwendig. Dies lässt sich jedoch durch eine Umrechnung zwischen den beiden Notationen vor Beginn der Berechnung vermeiden.

Die Erfindung lässt sich auch nutzen, wenn zwar individuelle Messungen zu den HOA der Hornhaut aber keine individuellen Messungen zu den HOA des Auges vorliegen. In einer bevorzugten Implementierung wird dabei außer der Cornea ***C*** auch die Vorderkammertiefe *d_{CL}* gemessen, d.h. es gilt *dfₙ*(*i*) *= N* + 4. Bei Verwendung eines Autorefraktometers (d.h. keine Messung der HOA) an Stelle eines Aberrometers (auch in Kombination mit einer subjektiven Refraktion) oder der alleinigen Verwendung einer subjektiven Refraktion ohne Einsatz eines Aberrometers oder Autorefraktometers ist zwar die Vergenzmatrix **S***_{M}* der LOA bekannt, aber darüber hinaus liegen keine individuellen Informationen über die HOA der (Mess-Strahlengangs-)Wellenfront ***S**_{M}* des gesamten Auges vor. Das bedeutet, genau wie beim Fall ohne HOA nur *dfₙ*(*iii*) *=* 3 statt *dfₙ*(*iii*) = *N* + 3 Berechnungsbedingungen vorliegen. Wenn man das Modell bis zur Ordnung *n* vollständig belegen möchte, legt man dann vorzugsweise entsprechend *dfₙ*(*ii*) = 2*N* + 5 statt *dfₙ*(*ii*) = *N* + 5 Parameter a priori fest. Dabei wird wieder bevorzugt der Fall betrachtet, dass sowohl *d_{L}* als auch *d_{LR}* zu den a priori festgelegten Parametern gehören. Damit lässt sich das Modell auf unterschiedliche Weise mit den weiteren Parametern belegen und für die Berechnung und Optimierung eines Brillenglases nutzen.

Insbesondere lässt sich dieser Fall genauso behandeln wie oben bei Vorliegen von gemessenen HOA des Auges beschrieben, wenn man Annahmen über die HOA des Auges trifft. Ein Beispiel hierfür sind an Hand eines Probandenkollektivs ermittelte oder modellbasierte Werte. Bevorzugt wird dabei eine verbleibende sphärische Aberration angenommen, da insbesondere aus T. O. Salmon und C. van de Pol: Normal-eye Zernike coefficients and root-mean-square wavefront errors, J Cataract Refract Surg, Vol. 32, Seiten 2064-2074 (2006) und aus J. Porter et al.: Monochromatic aberrations of the human eye in a large population, JOSA A, Vol. 18, No. 8 (2001) bekannt ist, dass diese im Mittel über die Population deutlich von Null verschieden ist. Die Berechnung der HOA der Linse erfolgt dann ganz analog zu dem oben beschriebenen Vorgehen mit dem einzigen Unterschied, dass die HOA-Werte für ***S**_{M}* nicht einer individuellen Messung entnommen, sondern auf die oben genannten Annahmen gestützt werden.

Trifft man alternativ geeignete Annahmen über die HOA der Linse, d.h. legt man die HOA beider Linsenflächen ***L***₁ und ***L***₂ a priori fest, können beispielsweise mit Hilfe der Algorithmen aus G. Esser et al.: "Derivation of the refraction equations for higher order aberrations of local wavefronts at oblique incidence", JOSA A, Vol. 27, No. 2 (2010) und von G. Esser et al.: "Derivation of the propagation equations for higher order aberrations of local wavefronts, JOSA A, Vol. 28, No. 11 (2011)" die HOA der Wellenfront ***S**_{M}* bis zur Ordnung *n* berechnet werden, indem man die Schritte 6,5,4,3,2,1 von der Netzhaut zur Cornea rückwärts durchläuft. Dabei gehen in die Berechnung von ***S**_{M}* insbesondere auch die a priori festgelegten *d_{L}* und *d_{LR}* ein.

Für die LOA der Linsenflächen werden dabei keine über obigen Ausführungen hinausgehenden a priori-Festlegungen getroffen, da die LOA der Wellenfront ***S**_{M}*, z.B. als gemessene Vergenzmatrix **S***_{M}*, aus der subjektiven Refraktion, der Autorefraktormessung oder einer Kombination daraus vorliegen.

Ein bevorzugter Fall ist hierbei, dass die HOA der Linsenflächen in der verwendeten Basis gleich Null gesetzt werden. Besonders bevorzugt wird diese Annahme in Bezug auf die Taylor-Basis getroffen. Weiterhin bevorzugt wird diese Annahme in Bezug auf die Zernike-Basis getroffen. Zwar sind in keiner Basis die HOA von ***S**_{M}* ein direktes Abbild der HOA von ***C***, weil die beteiligten Propagationen in jedem Fall auch HOA einführen, der Vorteil verschwindender HOA der Linsenflächen besteht aber in der Verminderung des Rechenaufwandes aufgrund vieler verschwindender Terme.

Alternativ können auch modellbasierte Werte für die HOA der Linsenflächen gewählt werden. Dies gilt insbesondere für sphärische Aberrationen, da insbesondere aus T. O. Salmon und C. van de Pol: Normal-eye Zernike coefficients and root-mean-square wavefront errors, J Cataract Refract Surg, Vol. 32, Seiten 2064-2074 (2006) und aus J. Porter et al.: Monochromatic aberrations of the human eye in a large population, JOSA A, Vol. 18, No. 8 (2001) bekannt ist, dass die sphärische Aberration der Linse im Mittel über die Population deutlich von Null verschieden ist. Dabei können diese unabhängig von den gemessenen Daten oder in Abhängigkeit von gemessenen Daten (z.B. Refraktionswerte, sphärische Aberration der Hornhaut) gewählt werden.

Außerdem lässt sich die Erfindung auch nutzen, wenn zwar individuelle Messungen zu den HOA des Auges aber keine individuellen Messungen zu den HOA der Hornhaut vorliegen. Bei Verwendung eines Keratometers an Stelle eines Keratographen liegen keine individuellen Informationen über die HOA der Hornhaut ***C*** vor. Bevorzugt wird aber der Fall betrachtet, dass Corneadaten in zweiter Ordnung vorliegen (gemessene Flächenbrechwertmatrix **C***_{M}*) und dass außerdem auch die Vorderkammertiefe *d_{CL}* gemessen ist, d.h. es gilt *dfₙ*(*i*) *=* 4.

Die Anzahl der Berechnungsbedingungen ist aufgrund der vorliegenden Messung der Wellenfront ***S**_{M}* gegeben durch *dfₙ*(*iii*) *= N* + 3*.* Die Anzahl der a priori festzulegenden Parameter ist damit wieder durch *dfₙ*(*ii*) = 2*N* + 5 gegeben. Diesmal stehen aber alle drei Flächen ***C***, ***L***₁ oder ***L***₂ zur Auswahl, um zwei davon a priori festzulegen und die dritte zu berechnen. Dabei wird wieder bevorzugt der Fall betrachtet, dass sowohl *d_{L}* als auch *d_{LR}* zu den a priori festgelegten Parametern gehören. Ansonsten müssen auch hier. für die LOA der Linsenflächen keine über die obigen Ausführungen hinausgehenden a priori-Festlegungen getroffen werden, da die LOA der Hornhaut ***C***, z.B. als gemessene Flächenbrechwertmatrix **C***_{M}*, aus der Keratometermessung vorliegen.

Insbesondere lässt sich dieser Fall genauso behandeln wie oben bei Vorliegen von gemessenen HOA der Hornhaut beschrieben, wenn man Annahmen über die HOA der Hornhaut trifft. Ein Beispiel hierfür sind an Hand eines Probandenkollektivs ermittelte oder modellbasierte Werte. Die Berechnung der HOA der Linse erfolgt dann ganz analog zu dem oben beschriebenen Vorgehen mit dem einzigen Unterschied, dass die HOA Werte für ***C*** nicht einer individuellen Messung entnommen, sondern durch die oben genannten Annahmen gestützt werden.

Trifft man alternativ geeignete Annahmen über die HOA der Linse, d.h. legt man die HOA beider Linsenflächen ***L***₁ und ***L***₂ a priori fest, können beispielsweise mit Hilfe der Algorithmen aus G. Esser et al.: "Derivation of the refraction equations for higher order aberrations of local wavefronts at oblique incidence", JOSA A, Vol. 27, No. 2 (2010) und von G. Esser et al.: "Derivation of the propagation equations for higher order aberrations of local wavefronts, JOSA A, Vol. 28, No. 11 (2011)" die HOA der Cornea ***C*** bis zur Ordnung *n* berechnet werden, indem man die Schritte 6,5,4,3,2 von der Netzhaut zur Cornea rückwärts durchläuft und in Schritt 1, also der Brechung an der Cornea, die HOA von ***C*** so anpasst, dass die so vor der Cornea berechnete Wellenfront mit der gemessenen Wellenfront ***S*** inklusive ihrer HOA bis zur Ordnung *n* übereinstimmt.

Ein bevorzugter Fall ist hierbei wieder aus oben beschriebenen Gründen, dass die HOA der Linsenflächen in der verwendeten Basis gleich Null gesetzt werden.

Alternativ können auch modellbasierte Werte für die HOA der Linsenflächen gewählt werden. Dies gilt insbesondere für sphärische Aberrationen, da insbesondere aus T. O. Salmon und C. van de Pol: Normal-eye Zernike coefficients and root-mean-square wavefront errors, J Cataract Refract Surg, Vol. 32, Seiten 2064-2074 (2006) und aus J. Porter et al.: Monochromatic aberrations of the human eye in a large population, JOSA A, Vol. 18, No. 8 (2001) bekannt ist, dass die sphärische Aberration der Linse im Mittel über die Population deutlich von Null verschieden ist. Dabei können diese unabhängig von den gemessenen Daten oder in Abhängigkeit von gemessenen Daten (z.B. Refraktionswerte, sphärische Aberration der Hornhaut) gewählt werden.

Selbst wenn weder ein Topograph noch ein Aberrometer verwendet werden, also keine individuellen Messdaten zu HOAs vorliegen, können dennoch modellbasierte Annahmen über die HOA der Hornhaut, der Linse bzw. das Auge getroffen und bei der Belegung des Augenmodells verwendet werden. Die angenommen Werte können dabei auch an Hand entsprechender Modelle in Abhängigkeit von gemessenen Daten (z.B. Refraktionswerte, Ergebnisse der Topometrie- oder Autofraktometermessung) gewählt werden. Beispiele für die genaue Berechnung wurden bereits weiter oben beschrieben, wobei an Stelle der gemessenen Werte für die HOAs die entsprechenden Annahmen treten. Dies gilt auch wieder insbesondere für sphärische Aberrationen, da diese im Mittel über die Population deutlich von Null verschieden ist. Dabei kann diese unabhängig von den gemessenen Daten oder in Abhängigkeit von gemessenen Daten (z.B. Refraktionswerte, Ergebnisse der Topometrieoder Autorefraktometermessung) gewählt und der Hornhaut, einer der beiden Linsenflächen oder Kombinationen zugeordnet werden.

Auf Grund der großen Bedeutung der subjektiven Refraktion ist es vorteilhaft, auch die Ergebnisse einer derartigen subjektiven Augenglasbestimmung in die Belegung des Modells für die Optimierung zumindest teilweise eingehen zu lassen. Vorzugsweise werden subjektive Refraktionsdaten in der Form Sphäre, Zylinder und Achslage bereitgestellt. Der Einfachheit halber orientiert sich die Beschreibung des Vorgehens an dieser Notation mit *sph, cyl* und *a* für die Werte von Sphäre, Zylinder und Achslage.

Werden HOA nicht berücksichtigt, kann wie folgt vorgegangen werden:
Sollen nur die Werte der subjektiven Refraktion in die Optimierung einfließen, kann auf die Messung der Wellenfront ***S**_{M}* durch ein Aberrometer bzw. einen Autorefraktometer verzichtet werden und statt dessen die Matrix **S***_{M}* aus den subjektiven Werten aufgebaut werden: ${S}_{M} = \left(\begin{matrix}\left(sph+\frac{1}{2}⋅cyl\right) - \frac{1}{2} ⋅ cyl ⋅ cos \left(2a\right) & - \frac{1}{2} ⋅ cyl ⋅ sin \left(2a\right) \\ - \frac{1}{2} ⋅ cyl ⋅ sin \left(2a\right) & \left(sph+\frac{1}{2}⋅cyl\right) + \frac{1}{2} ⋅ cyl ⋅ cos \left(2a\right)\end{matrix}\right)$

Vorzugsweise werden aber die Ergebnisse der subjektiven Refraktion mit denen der aberrometrischen bzw. autorefraktometrischen Messung kombiniert, Dazu wird auf Basis beider Datensätze eine optimierte Refraktion beispielsweise nach einem in DE 10 2007 032 564 A1 beschriebenem Verfahren bestimmt. Diese wir durch die Werte *sphₒₚₜ*, *cylₒₚₜ* und *aₒₚₜ* beschrieben. Analog zu dem vorigen Abschnitt erhält man **S***_{M}* als ${S}_{M} = \left(\begin{matrix}\left({sph}_{opt}+\frac{1}{2}⋅{cyl}_{opt}\right) - \frac{1}{2} ⋅ {cyl}_{opt} ⋅ cos \left(2{a}_{opt}\right) & - \frac{1}{2} ⋅ {cyl}_{opt} ⋅ sin \left(2{a}_{opt}\right) \\ - \frac{1}{2} ⋅ {cyl}_{opt} ⋅ sin \left(2{a}_{opt}\right) & \left({sph}_{opt}+\frac{1}{2}⋅{cyl}_{opt}\right) + \frac{1}{2} ⋅ {cyl}_{opt} ⋅ cos \left(2{a}_{opt}\right)\end{matrix}\right)$

Gemäß DE 10 2007 032 564 A1 müssen nicht alle Werte der subjektiven Refraktion bzw. objektiven Messung in die optimierten Refraktionswerte eingehen. So kann beispielsweise im Fall einer Bestimmung der optimierten Refraktionswerten für die Nähe oder im Fall erwarteter Instrumentenmyopie auf die Verwendung der objektiv gemessenen Sphäre bzw. des objektiv gemessenen Defokusterms verzichtetet werden.

Auch bei der Einbeziehung subjektiver Refraktionsdaten können bei der Belegung des Modells wiederum auch die HOA berücksichtigt werden. Dazu ist es bei Verwendung der subjektiven Refraktionswerte erforderlich, diese in konsistenter Weise in den Datensatz einfließen zu lassen. Zur Vereinfachung der Darstellung wird im Folgenden ein Formalismus auf Basis von Zernike Koeffizienten gewählt, wobei grundsätzlich auch eine andere Basis verwendet werden kann.

Im Folgenden wird zunächst der Zusammenhang zwischen einem Satz Zernike Koeffizienten zur Darstellung von Wellenfronten (*cₙₘ*) mit *r*₀ als Radius der Wellenfront und Refraktionswerten (*sph, cyl*, *a*) betrachtet. Der Radius *r*₀ wird vorzugsweise entweder gemessen oder auf Basis von Modellannahmen festgelegt. Bei Verwendung der RMS-Metrik ergibt beispielsweise der bijektive Zusammenhang $\begin{matrix}\left(\begin{matrix}{c}_{2 , - 2} \\ {c}_{2 , 0} \\ {c}_{2 , + 2}\end{matrix}\right) = {g}_{RMS} \left(sph, cyl, a\right) = \frac{{r}_{0}^{2}}{2 \sqrt{6}} ⋅ \left(\begin{matrix}\frac{1}{2} ⋅ cyl ⋅ sin \left(2a\right) \\ - \frac{1}{\sqrt{2}} ⋅ \left(sph+\frac{1}{2}cyl\right) \\ \frac{1}{2} ⋅ cyl ⋅ cos \left(2a\right)\end{matrix}\right) ⇔ \\ \left(\begin{matrix}sph \\ cyl \\ a\end{matrix}\right) = {f}_{RMS} \left({c}_{2 , - 2}, {c}_{2 , 0}, {c}_{2 , + 2}\right) = \left(\begin{matrix}- \frac{4 \sqrt{3}}{{r}_{0}^{2}} ⋅ \left({c}_{2 , 0}-\frac{1}{\sqrt{2}}⋅\sqrt{{{c}_{2 , - 2}}^{2} + {{c}_{2 , + 2}}^{2}}\right) \\ - \frac{4 \sqrt{6}}{{r}_{0}^{2}} ⋅ \sqrt{{{c}_{2 , - 2}}^{2} + {{c}_{2 , + 2}}^{2}} \\ \frac{1}{2} ⋅ arctan \left({c}_{2 , + 2}, {c}_{2 , - 2}\right) + \frac{π}{2}\end{matrix}\right)\end{matrix}$

Dies ist jedoch nur als Beispiel für eine Metrik der generellen Form $\left(\begin{matrix}sph \\ cyl \\ a\end{matrix}\right) = {f}_{0} \left({c}_{2 , - 2}, {c}_{2 , 0}, {c}_{2 , + 2}\right) ⇔ \left(\begin{matrix}{c}_{2 , - 2} \\ {c}_{2 , 0} \\ {c}_{2 , + 2}\end{matrix}\right) = {g}_{0} \left(sph, cyl, a\right)$ zu verstehen.

Darüber hinaus gibt es Zusammenhänge, bei denen auch HOA in die Refraktionswerte eingehen. Diese Abbildung ist dann für die Berechnung der Refraktionswerte immer noch surjektiv, aber nicht mehr bijektiv, d.h. der komplette Satz aller Zernike Koeffizienten aller Abbildungsfehler lässt sich nicht eindeutig aus den Refraktionswerten reproduzieren. Die Koeffizienten der Abbildungsfehler niedriger Ordnung lassen sich jedoch auch hier wieder eindeutig bestimmen, wenn die Koeffizienten für die HOA vorgegeben werden: $\left(\begin{matrix}sph \\ cyl \\ a\end{matrix}\right) = {f}_{1} \left({c}_{2 , - 2}, {c}_{2 , 0}, {c}_{2 , + 2}, {c}_{i , j}\right) ⇔ \left(\begin{matrix}{c}_{2 , - 2} \\ {c}_{2 , 0} \\ {c}_{2 , + 2}\end{matrix}\right) = {g}_{1} \left(sph, cyl, a, {c}_{i , j}\right) \left(i>2\right)$

Analoge Berechnungen und Ableitung sind naturgemäß auch in anderen Notationen wie beispielsweise mit den in den Publikationen von G. Esser et al.: "Derivation of the refraction equations for higher order aberra-tions of local wavefronts at oblique incidence", JOSA A, Vol. 27, No. 2 (2010) und von G. Esser et al.: "Derivation of the propagation equations for higher order aberra-tions of local wavefronts, JOSA A, Vol. 28, No. 11 (2011)" verwendeten lokalen Ableitungen der Wellenfronten möglich. Liegen autorefaktometrische Messung mit Daten zu HOA vor, können diese Daten oder Teile dieser Daten verwendet werden, um zusammen mit den subjektiven Refraktionswerten beispielsweise gemäß DE 10 2007 032 564 A1 einen Satz optimierter Refraktionsdaten zu bestimmen. Dabei ist die gleichzeitige Verwendung sowohl subjektiver Refraktionsdaten als auch der Messdaten nicht erforderlich. Die in diesem Abschnitt im weiteren als optimierte Refraktionswerte (*sphₒₚₜ*, *cylₒₚₜ* und *aₒₚₜ* ) bezeichneten Größen können also auch direkt aus der subjektiven Refraktionsbestimmung ohne Verwendung objektiver Messgrößen übernommen werden.

Grundsätzlich müssen nicht alle Werte der subjektiven Refraktion bzw. objektiven Messung in die optimierten Refraktionswerte eingehen. So kann beispielsweise im Fall einer Bestimmung der optimierten Refraktionswerten für die Nähe oder im Fall erwarteter Instrumentenmyopie auf die Verwendung der objektiv gemessenen Sphäre bzw. des objektiv gemessenen Defokusterms verzichtet werden.

Auf Basis der optimierten Refraktionswerten wird dann eine Wellenfront (vorzugsweise dargestellt durch die Zernike-Koeffizienten *o_{i,j}*) bestimmt, die diesen optimierten Werten entspricht. Diese Wellenfront wird dann an Stelle der oben beschriebenen, gemessenen austretenden Wellenfront verwendet. Bei Verwendung einer Metrik nach Gleichung (8) können die Koeffizienten zweiter Ordnung dieser Wellenfront gemäß Gleichung (8) aus den optimierten Refraktionswerten berechnet und die Koeffizienten höherer Ordnung aus der objektiven Messung der austretenden Wellenfront dargestellt durch die Koeffizienten *m_{i,j}*, direkt übernommen werden: $\left(\begin{matrix}{o}_{2 , - 2} \\ {o}_{2 , 0} \\ {o}_{2 , + 2}\end{matrix}\right) = {g}_{0} \left({sph}_{opt}, {cyl}_{opt}, {a}_{opt}\right) {o}_{i . j} = {m}_{i . j} \left(i>2\right)$

Bei Verwendung einer Metrik nach Gleichung (9) sind die Koeffizienten zweiter Ordnung der Wellenfront (*o_{i,j}*) dagegen nicht nur von der optimierten Refraktion abhängig, sondern dagegen so zu wählen, dass gilt $\left(\begin{matrix}{sph}_{opt} \\ {cyl}_{opt} \\ {a}_{opt}\end{matrix}\right) = {f}_{1} \left({o}_{2 , - 2}, {o}_{2 , 0}, {o}_{2 , + 2}, {c}_{i , j}\right) \left(i>2\right)$ und hängen deswegen zusätzlich direkt von den Koeffizienten höherer Ordnung der gemessenen austretenden Wellenfront (*m_{i,j}*) ab: $\left(\begin{matrix}{o}_{2 , - 2} \\ {o}_{2 , 0} \\ {o}_{2 , + 2}\end{matrix}\right) = {g}_{1} \left({sph}_{opt}, {cyl}_{opt}, {a}_{opt}, {m}_{i , j}\right) {o}_{i . j} = {m}_{i . j}$

Die Auswertung der Aberrationen während des Berechnungs- bzw. Optimierungsverfahrens kann an unterschiedlichen Stellen im Strahlverlauf vorgenommen werden, d.h. die Bewertungsfläche kann an unterschiedlichen Positionen vorgesehen werden. Während in vielen herkömmlichen Verfahren die Bewertungsfläche an einer Scheitelpunktkugel vor dem Auge lag, wäre es grundsätzlich auch möglich die Bewertung an der Netzhaut vorzunehmen, also nach einem vollständigen Durchlaufen des Objektlichts durch das gesamte Modellauge bis zur Netzhaut.

Erfindungsgemäß wurde erkannt, dass es besonders vorteilhaft ist, die Bewertungsfläche nicht hinter der Linsenrückfläche bzw. nicht hinter der Austrittspupille vorzusehen. Stattdessen soll die Bewertung der abbildenden Wellenfront des Objektlichts vorteilhafterweise zwar innerhalb des Modellauges aber insbesondere vor dem Glaskörper der Modellauges erfolgen. Das Objektlicht wird somit nicht für jede Bewertungsstelle (Durchblickspunkt) des Brillenglases und für jeden Iterationsschritt durch den Glaskörper propagiert. Stattdessen wird innerhalb des Modellauges eine Referenzwellenfront R definiert, die dann beispielsweise bei der Glasoptimierung verwendet wird. Diese Referenzwellenfront hat dabei die Eigenschaft, dass sie bei weiterer Propagation durch das Auge bis zur Retina zu einem punktförmigen Bild führt. Entsprechend kann die Referenzwellenfront durch Rückpropagation einer Wellenfront, die auf der Netzhaut in einen Punkt zusammenläuft, von der Netzhaut bis zur Position der Referenzwellenfront bestimmt werden. Da beispielsweise die gemessene Wellenfront ***S**_{M}* genau die Wellenfront ist, die aus einer punktförmigen Lichtquelle auf der Netzhaut hervorgeht, kann stattdessen auch diese ins Augeninnere bis zur Position der Referenzwellenfront propagiert werden.

Mathematisch betrachtet sind beide Vorgehensweisen äquivalent und führen auf die gleichen Formeln für die Referenzwellenfront. Im Folgenden wird zur Ableitung der entsprechenden Referenzwellenfronten jeweils der Weg gewählt, der mit weniger Propagationsschritten auskommt und eine einfachere Darstellung ermöglicht. Nachfolgend wird beispielhaft nur die Behandlung der Komponenten des Defokus und des Astigmatismus beschrieben. Eine Ausdehnung auf HOA und die Verwendung der subjektiven Refraktion ist jedoch ebenfalls möglich und vorteilhaft.

Bei der Berücksichtigung von HOA können diese analog zur Berechnung der HOA gemäß untenstehender Ausführungen durch Brechung (G. Esser et al.: "Derivation of the refraction equations for higher order aberrations of local wavefronts at oblique incidence", JOSAA, Vol. 27, No. 2 (2010)) und Propagation (G. Esser et al.: "Derivation of the propagation equations for higher order aberrations of local wavefronts", JOSA A, Vol. 28, No. 11 (2011)) erfolgen.

Da die Wellenfrontpropagation ein nichtlinearer Vorgang ist, führt eine Brillenglasoptimierung, die eine abbildende Wellenfront durch Vergleich mit einer Referenzwellenfront bewertet, im allgemeinen zu verschiedenen Ergebnissen, je nachdem, an welcher Fläche innerhalb des Auges dieser Vergleich stattfindet.

In einer bevorzugten Ausführungsform wird lediglich auf den allerletzten Schritt (insbesondere Schritt 6b), also die Propagation von der AP zur Netzhaut verzichtet. Die einfallende Wellenfront wird also nach der Brechung an der Linsenrückfläche nur bis zur AP simuliert (also Berechnung von ***S**_{AP}* gemäß eingangs genanntem Schritt 6a) und dort mit einer Referenzwellenfront ***R**_{AP}* verglichen. Diese zeichnet sich dabei dadurch aus, dass sie bei der Propagation zur Netzhaut dort ein punktförmiges Bild ergibt. Gemäß dem oben Gesagten ist die Vergenzmatrix dieser Wellenfront gerade ${R}_{AP} = {D}_{AP} = {D}_{LR}^{\left(b\right)} = \frac{1}{{τ}_{LR}^{\left(b\right)}} 1 = \frac{1}{{τ}_{LR} - {τ}_{LR}^{\left(a\right)}} 1 = \frac{1}{1 / {D}_{LR} - {d}_{LR}^{\left(a\right)} / {n}_{LR}} 1$ mit dem aus Gleichung (2) bzw. (3) bestimmten *D_{LR}* sowie dem negativen (akkommodationsabhängigen) Wert ${d}_{LR}^{\left(a\right)} < 0$, dessen Betrag den Abstand zwischen der Linsenrückfläche und der AP beschriebt.

In einer weiterhin bevorzugten Ausführungsform wird außerdem auf den vorletzten Schritt, insgesamt also die Propagation von der Linsenrückfläche zur Netzhaut verzichtet. Die einfallende Wellenfront wird also nur bis nach der Brechung an der Linsenrückfläche simuliert (also Berechnung von ***S**'*_{*L*2} gemäß eingangs genanntem Schritt 5) und dort mit einer Referenzwellenfront ***R**'*_{*L*2} verglichen. Diese zeichnet sich dabei dadurch aus, dass sie bei der Propagation zur Netzhaut dort ein punktförmiges Bild ergibt. Gemäß dem oben Gesagten ist die Vergenzmatrix dieser Wellenfront gerade ${{R}^{′}}_{L 2} = D {′}_{L 2} = {D}_{LR} ⋅ 1$ mit dem aus Gleichung (2) bzw. (3) bestimmten *D_{LR}.*

Eine weitere Vereinfachung ergibt sich, wenn man den Vergleich vor die Brechung durch die Linsenrückfläche legt. In diesem Fall muss die einfallende Wellenfront nur bis ***S***_{*L*2} gemäß obigem Schritt 4 simuliert, also berechnet werden. Dazu wird analog zu ***S**'*_{*L*2} eine Referenzwellenfront ***R***_{*L*2} definiert, die nach der Brechung an der Linsenrückfläche und der Propagation zur Netzhaut dort ein punktförmiges Bild ergibt. Diese bestimmt sich zu ${R}_{L 2} = R {′}_{L 2} - {L}_{2} = {D}_{LR} ⋅ 1 - {L}_{2}$ mit dem aus Gleichung (2) bzw. (3) bestimmten *D_{LR}* und dem aus der Literatur bzw. aus Messungen bekanntem ***L***₂.

Im Fall einer rotationssymmetrischen Linsenrückfläche vereinfacht sich dies zu ${R}_{L 2} = \left({D}_{LR}-{L}_{2 , xx}\right) ⋅ 1$

Insbesondere soweit die Linsendicke ebenfalls der Literatur entnommen wird, bietet es sich in einer weiteren bevorzugten Ausführungsform an, als nächsten Vereinfachungsschritt auf die Propagation durch die Linse zu verzichten und den Vergleich hinter der Brechung durch die Linsenvorderfläche auszuführen. In Weiterführung des oben Gesagten verwendet man dazu vorzugsweise eine Referenzwellenfront ***R**'*_{*L*1} , die aus ***R***_{*L*2} durch Rückwärtspropagation um die Linsendicke entsteht und folgende Vergenzmatrix besitzt: $R {′}_{L 1} = {R}_{L 2} / \left(1+{τ}_{L}{R}_{L 2}\right)$ mit dem aus Gleichung (2) bzw. (3) bestimmten *D_{LR}* und dem aus der Literatur bzw. aus Messungen bekannten *τ_{L}* = *d_{L}*/*n_{L}* sowie der aus Gl.(6) bzw. (7) bestimmten Vergenzmatrix **R**_{*L*2}.

Im Fall einer rotationssymmetrischen Linsenrückfläche vereinfacht sich dies zu $R {′}_{L 1} = \frac{{D}_{LR} - {L}_{2 , xx}}{1 + {τ}_{L} ⋅ \left({D}_{LR}-{L}_{2 , xx}\right)} ⋅ 1$

Wie bei obigen Modellen gilt auch hier, dass selbst wenn die Betrachtung vor den letzten Schritten stattfindet und - je nach Notation - die Größe *D_{LR}* nicht explizit vorkommt, diese Größe dennoch zusammen mit *d_{L}* und ***L***₂ zumindest implizit eingeht, da sie zusammen die Verteilung der Wirkung ***L*₁** in der Linsenvorderfläche steuern.

Eine noch weitere Vereinfachung ergibt sich, wenn man den Vergleich vor die Brechung durch die Linsenvorderfläche legt. In diesem Fall muss die einfallende Wellenfront nur bis **S**_{L1} gemäß Schritt 2 simuliert werden. Dazu wird analog zu ***R**'*_{*L*1} eine Referenzwellenfront ***R***_{*L*1} definiert, die nach der Brechung an der Linsenvorderfläche und den weiteren Schritten an der Netzhaut zu einem Punkt konvergiert. Diese kann man entweder durch die Brechung von ***R**'*_{*L*1} an ***L***₁ berechnen oder direkt aus der Brechung der gemessenen Wellenfront ***S**_{M}* an der Hornhaut C und einer anschließenden Propagation um *d_{CL}* bestimmen. In beiden Fällen erhält man ${R}_{L 1} = \frac{{S}_{M} + C}{1 - {τ}_{CL} ⋅ \left({S}_{M}+C\right)}$

Darin gehen die Größen *D_{LR} , d_{L}* und **L**₂ nun nicht mehr ein, es ist also ausreichend, **S***_{M}* , **C** und *d_{CL}* zu kennen.

Mit relativ wenig Rechenaufwand verbunden ist eine Ausführungsform, in der der Vergleich nach der Brechung an der Hornhaut durchgeführt wird. In diesem Fall werden nur noch ***S**_{M}* und **C** berücksichtigt: $R {′}_{C} = {S}_{M} + C$

Eine weitere sehr effiziente Möglichkeit in einem Beispiel, das nicht unter den beanspruchten Gegenstand fällt, ist der Positionierung der Bewertungsfläche an der Austrittspupille des Modellauges. Diese liegt vorzugsweise vor der Linsenrückfläche.

Das Augenmodell und die Belegung desselben kann wie folgt erweitert werden:
Grundsätzlich kann das Augenmodell zwischen Hornhaut und Vorderkammer unterschieden. Dazu wird hinter der Hornhaut Vorderfläche ***C***₁ (vormals ***C***) im Abstand *d_{C}* eine Hornhautrückfläche ***C***₂ eingeführt und für Hornhaut und Vorderkammer zwei unterschiedliche Brechungsindices *n_{C}* bzw. *n_{CL}* angegeben. Ferner wird oben ausgeführte erste Schritt (Brechung der Wellenfront S an der Hornhaut ***C*** zu Wellenfront ***S**'_{C}* mit Vergenzmatrix ***S**'_{C}* = **S** + **C** ) durch folgende drei Schritte ersetzt:
1a: Brechung der Wellenfront ***S*** an der Hornhautvorderfläche ***C***₁ zur Wellenfront ***S**'*_{*C*1} mit der Vergenzmatrix **S**'_{*C*1} = **S** + **C**₁
1b: Propagation um die Dicke der Hornhaut *d_{C}* zur Wellenfront ***S***_{*C*2} mit Vergenzmatrix ***S***_{*C*2} = **S**'_{*C*1}/(**1** *- τ_{C}**S**'***_{*C*1}**)
1c: Brechung an der Hornhautrückfläche ***C***₂ zur Wellenfront ***S**'*_{*C*2} mit Vergenzmatrix **S***'*_{*C*2} = ***S***_{*C*2} +**C**₂
wobei ${τ}_{C} = \frac{{d}_{C}}{{n}_{C}}$

Analog zu den anderen Werten können auch hier die Werte für *d_{C}* und ***C***₂ jeweils gemessen, der Literatur entnommen oder abgeleitet werden. Beispielhaft seien hier einige Möglichkeiten für ***C***₂ beschrieben:
So kann - falls keine Messung an der Hornhautrückfläche vorliegt - die Form der Hornhautrückfläche aus bekannten Augenmodellen entnommen werden. Alternativ kann in diesem Fall auch die Hornhautrückfläche aus der gemessenen Form der Hornhautvorderfläche abgeleitet werden. Dazu bietet es sich an, entweder eine gleichmäßige Hornhautdicke (definiert beispielsweise als "in Richtung der Pfeilhöhe" oder "in radialer Richtung von einem "Hornhautkrümmungsmittelpunkt" ausgehend") anzunehmen. Die Dicke kann dabei entweder einer Messung entnommen, aus dieser abgeleitet oder der Literatur entnommen werden. Weiterhin können lokale Eigenschaften auch nur teilweise auf die Rückfläche übertragen werden.

Wird lediglich ein Hauptschnitt der Hornhautrückfläche gemessen, kann diese Information verwendet werden, um die vollständige Rückfläche zu rekonstruieren. Dies kann beispielsweise durch das Aufstellen einer Funktion der Dicke oder Pfeilhöhe der Hornhautrückfläche vom Radius oder der Dicke von der Pfeilhöhe der Vorderfläche geschehen.

In den meisten derartigen Fällen werden dabei die Hornhaut Vorder- und Rückfläche in demselben Normalschnitt (d.h. hier in der x-Richtung) bekannt sein.

Die Tatsache, dass es sich bei dem menschlichen Auge um ein nicht-zentriertes optisches System handelt, kann dadurch Rechnung getragen werden, dass die optischen Elemente gegen eine zentrale Achse versetzt und/oder verkippt angeordnet werden.

Dies kann sich auf die einzelnen Elemente als Ganzes (d.h. Hornhaut und Linse) oder alle brechenden Flächen einzeln (Hornhautvorderfläche, ggf. Hornhautrückfläche, Linsenvorderfläche und Linsenrückfläche) beziehen. Die entsprechenden Parameter sind jeweils beispielsweise zwei laterale Koordinaten der Verschiebung des Zentrums des Elements bzw. der Fläche von der zentralen Achse und zwei Kippwinkel. Alternativ können auch Zernikekoeffizenten erster Ordnung (Tip/Tilt) herangezogen werden.

Die relevante Größe, die von der Änderung gegenüber einem zentrierten System betroffen ist, ist der Hauptstrahl, der der Erfindung für alle Berechnungen zugrunde liegt und dem bis jetzt behandeltem zentrierten Systemen der optischen Achse entspricht. Im allgemeinen Fall ist der Hauptstrahl derjenige Strahl, der von der Retina als Zentrum der Mess-Wellenfront (bevorzugt dem Ort der Fovea) ausgeht und durch die Mitte der Eintrittspupille trifft. Anders als im zentrierten System, in dem dieser Strahl in geeigneten Koordinaten mit der globalen z-Achse des Augenmodells zusammenfällt, ist der Strahl nun nur noch abschnittsweise von Grenzfläche zu Grenzfläche gerade und trifft auch auf jeder Grenzfläche dezentriert und unter bestimmten Einfallswinkeln auf. Vor Berechnung der Wellenfronten (in zweiter Ordnung oder in höherer Ordnung) müssen der Verlauf des Hauptstrahls, die Positionen der Durchstoßpunkte und die jeweiligen Einfallswinkel bestimmt werden.

Wenn die Änderung der einzelnen Elemente gegenüber einem zentrierten System klein sind, kann der Hauptstrahl näherungsweise durch folgende affine Gleichungen bestimmt werden. Diese entsprechen einer affin erweiterten Form der linearen Optik in Bezug auf ein globales Koordinatensystem. Jede Propagation eines Strahls mit lateraler Koordinate r und Richtungswinkel *α* gegen die globale z-Achse um eine Länge d wird dabei durch die 2x2-Transfermatrix-Gleichung $\left(\begin{matrix}r ′ \\ α ′\end{matrix}\right) = \left(\begin{matrix}1 & d \\ 0 & 1\end{matrix}\right) \left(\begin{matrix}r \\ α\end{matrix}\right)$ auf den propagierten Strahl mit lateraler Koordinate r' und Richtungswinkel *α'* abgebildet. Die Brechung dagegen wird durch die erweiterte 2x2-Transfermatrix-Gleichung $\left(\begin{matrix}r ′ \\ α ′\end{matrix}\right) = \left(\begin{matrix}1 & 0 \\ \left(\frac{n}{{n}^{⋅}}-1\right) ρ & \frac{n}{n ′}\end{matrix}\right) \left(\begin{matrix}r \\ α\end{matrix}\right) + \left(\begin{matrix}Δ r \\ Δ α\end{matrix}\right)$ beschrieben. Dabei sind *ρ* die Krümmung der brechenden Fläche und *n, n'* die Brechungsindizes vor und nach der Brechung. Weiter sind Δ*r* und Δ*α* Korrekturanteile der Strahlparameter, die durch die laterale Verschiebung und die Verkippung der brechenden Grenzfläche zustande kommen, und aus dem Verkippungs- und Verschiebungsparametern der Fläche etwa mit Hilfe der Prentice'schen Regel bestimmt werden können. Im Falle zylindrischer Flächen sind entsprechend die 4x4-Transfermatrix-Gleichungen zu verwenden.

Wenn die in GI.(10a) und (10b) beschriebene Näherung nicht ausreicht, kann der Hauptstrahl, d.h. alle Durchstoßpunkte durch die Flächen numerisch bestimmt werden. In beiden Fällen bewirkt die Hauptstrahlbestimmung, dass alle Propagationsabstände, die Koordinaten der Durchstoßpunkte und die Ein- und Ausfallswinkel *ε*, *ε'* an jeder Grenzfläche bestimmt werden. Im Falle der affinen Gleichungen ergeben sich *ε*, *ε'* aus *α, α'* , und den Flächennormalen, die sich aus r , der Dezentration und der dioptrischen Wirkung gemäß der Prentice'schen Regel am Durchstoßpunkt bestimmen lassen. Im allgemeinen Fall ergeben sich *ε* , *ε'* aus der numerischen Hauptstrahldurchrechnung und den Flächennormalen am Durchstoßpunkt r. Letztere können z.B. durch Ableiten der Flächendarstellung (z.B. Taylordarstellung oder Zernikedarstellung um den Punkt *r* = 0, oder B-Splines) an der Stelle *r* berechnet werden.

Die Flächenbrechwertmatrix **C** ist im Fall der affinen Gleichungen konstant und durch das jeweilige brechende Element gegeben. Im Fall der numerischen Durchrechnung ergibt sich **C** am Durchstoßpunkt durch die lokalen zweiten Ableitungen in Bezug auf ein lokales Koordinatensystem.

Mit den derart berechneten Ein- bzw. Ausfallswinkeln *ε*, *ε'* und der gegebenenfalls neu bestimmten Flächenbrechwertmatrix **C** können die Berechnungsverfahren der Erfindung wie folgt beschrieben auch dezentrierte Systeme angewandt werden:
In zweiter Ordnung tritt bei der Brechung an Stelle der Vergenzgleichung in Matrixform **S**'_{C} = **S + C** die generalisierte Coddingtongleichung $Cos \left(ε′\right) S {′}_{C} Cos \left(ε′\right) = Cos \left(ε\right) S Cos \left(ε\right) + ν C$ mit $\begin{matrix}ν = \frac{n ′ cos ε ′ - n cos ε}{n ′ - n} \\ Cos \left(ε\right) = \left(\begin{matrix}1 & 0 \\ 0 & cos \left(ε\right)\end{matrix}\right) und Cos \left(ε′\right) = \left(\begin{matrix}1 & 0 \\ 0 & cos \left(ε′\right)\end{matrix}\right)\end{matrix}$

An Stelle der Propagationsgleichung **S'** = **S**/(**1** - τ**S**) mit τ = d/n tritt die Matrixgleichung $s ′ = s / \left(1-{τ}_{α , r}⋅s\right) mit {τ}_{α , r} = {d}_{α , r} / n$

Dabei bezeichnet *d*_{α,r}, den tatsächlichen räumlichen Abstand zwischen den Durchstoßpunkten der aufeinanderfolgender Flächen.

Sollen HOA mit berücksichtigt werden, sind für Brechung und Propagation statt der Gleichungen (11) und (12) die entsprechend erweiterten Gleichungen für die jeweiligen Ordnungen aus den Publikationen von G. Esser et al.: "Derivation of the refraction equations for higher order aberrations of local wavefronts at oblique incidence", JOSA A, Vol. 27, No. 2 (2010) und von G. Esser et al.: "Derivation of the propagation equations for higher order aberrations of local wavefronts, JOSA A, Vol. 28, No. 11 (2011)" zu verwenden und dazu die Koeffizienten der Taylorentwicklung der brechenden Fläche in dem Koordinatensystem des Strahleinfalls wie ebenda beschrieben zu ermitteln.

### Weiterhin kann eine - ebenfalls auch verschobene bzw. verkippte - Blende eingeführt werden um die Vignettierung durch die Regenbogenhaut zu berücksichtigen

Nachfolgend werden zusammenfassend nochmals beispielhaft kommerziell erhältliche Geräte genannt, mit denen für die Erfindung notwendige oder bevorzugte Parametermessungen durchgeführt werden können. Sämtliche hier aufgeführten Geräte sind beispielsweise auch in M. Kaschke et al. "Optical Devices in Ophthalmology and Optometry", Wiley-VCH (2014) beschrieben:
- Form der Hornhautvorderfläche: Die Form der Hornhautvorderfläche kann mit Keratographen (z.B. Placido-Disk Keratograph ATLAS 9000 von Zeiss, Small-Target Keratograph E300 von Medmont und Placido-Disk Einheit des Galilei G2 von Ziemer) ermittelt werden. In den Fällen, in denen lediglich die Krümmungen ermittelt und genutzt werden, ist auch der Einsatz von Keratometern (z.B. manuelles Helmholtz-Littmann Keratometer von Zeiss, manuelles Javal-Schiötz Keratometer von Haag-Streit und automatische elektrooptische Keratometrieeinheit des IOL Masters von Zeiss) möglich.
- Form der Linsenvorder- und Rückfläche: Die Form der Linsenflächen kann in einem Schnitt oder dreidimensional mit Scheimpflugkameras (z.B. Pantacam von Oculus, SL-45 von Topcon und Ga-lilei G2 von Ziemer) und OCTs (z.B. IOL Master von 500 von Zeiss, SL-OCT von Heidelberg und Visante OCT von Zeiss) gemessen werden.
- Abstand zwischen den beschriebenen Flächen: Abstände zwischen den drei genannten Flächen können sowohl mit einigen der oben genannten Scheimpflugkameras und OCTs als auch mit dem Lenstar LS900 von Haag-Streit gemessen werden. Zwar könnten einige dieser Geräte auch genutzt werden, um den Abstand zwischen diesen Flächen und der Netzhaut zu messen. Allerdings sind solche Messungen meist sehr aufwendig und können im Rahmen der vorliegenden Erfindung gerade vermieden werden. Hierzu wird beispielhaft auf R. B. Rabbetts "Bennett & Rabbetts' Clinical Visual Optics", Butterworth Heinemann Elsevier Health Sciences (2007) verwiesen.
- Brechungsindices der beteiligten Medien: Auf eine Nennung von Geräten, mit denen die Brechungsindices der beteiligten Medien gemessen werden können, kann hier verzichtet werden, da diese Werte vorzugsweise der Literatur entnommen werden. Hierzu wird beispielhaft auf R. B. Rabbetts "Bennett & Rabbetts' Clinical Visual Optics", Butterworth Heinemann Elsevier Health Sciences (2007) verwiesen.
- Abbildungsfehler höherer bzw. niedriger Ordnung des Auges: Abbildungsfehler des Auges können mit Aberrometern (z.B. iProfiler von Zeiss und KR-1W von Topcon auf Basis von Schack-Hartmann Sensoren sowie OPD-Scan III von Nidek auf Basis der dynamischen Siaskopie) gemessen werden. Bei einer Betrachtung der Abbildungsfehler niedriger Ordnung ist die Verwendung von Autorefraktometern (z.B. RM-8900 von Topcon und KW-2000 von Kowa) ausreichend.

### Bezugszeichenliste

- 10: Hauptstrahl
- 12: Auge
- 14: erste Fläche des Brillenglases (Vorderfläche)
- 16: zweite Fläche des Brillenglases (Rückfläche)
- 18: Hornhautvorderfläche
- 20: Augenlinse

## Patentansprüche

1. Computerimplementiertes Verfahren zum Berechnen oder Optimieren eines Brillenglases zum Zweck der Herstellung des Brillenglases für zumindest ein Auge eines Brillenträgers umfassend die Schritte:
- Bereitstellen von individuellen Refraktionsdaten des zumindest einen Auges des Brillenträgers;
- Festlegen eines individuellen Augenmodells, in welchem zumindest
-- eine Form einer Hornhautvorderfläche (18) eines Modellauges (12); und
-- eine Referenzaberration an einer Bewertungsfläche innerhalb des Modellauges, wobei die Bewertungsfläche an einer Grenzfläche des Modellauges (12) liegt und vor einer Linsenrückfläche des Modellauges (12) angeordnet ist,
derart anhand von individuellen Messwerten für das Auge des Brillenträgers und/oder von Standardwerten und/oder anhand der bereitgestellten individuellen Refraktionsdaten festgelegt werden, dass das Modellauge (12) die bereitgestellten individuellen Refraktionsdaten aufweist;
- Vorgeben einer ersten Fläche (14) und einer zweiten Fläche (16) für das zu berechnende bzw. optimierende Brillenglas;
- Ermitteln des Verlaufs eines Hauptstrahls (10) durch zumindest einen Durchblickspunkt (i) zumindest einer zu berechnenden oder optimierenden Fläche (14; 16) des Brillenglases in das Modellauge (12) zumindest bis zur Bewertungsfläche;
- Auswerten einer Aberration einer entlang des Hauptstrahls propagierenden, aus einer auf die erste Fläche des Brillenglases auftreffenden sphärischen Wellenfront resultierenden Wellenfront an der Bewertungsfläche im Vergleich zur Referenzaberration; und
- iteratives Variieren der zumindest einen zu berechnenden oder optimierenden Fläche (14; 16) des Brillenglases bis die ausgewertete Aberration einer vorgegebenen Sollaberration entspricht.

2. Verfahren nach Anspruch 1, wobei die Referenzaberration eine Aberration einer im Wesentlichen in einem Punkt auf einer Netzhaut des Augenmodells konvergierenden Referenzwellenfront vor einer Brechung an der Linsenrückfläche einer Linse des Modellauges beschreibt.

3. Verfahren nach Anspruch 1 oder 2, wobei vorzugsweise das Auswerten der Aberration der entlang des Hauptstrahls propagierenden Wellenfront an der Bewertungsfläche ein Berechnen einer Brechung der Wellenfront an der Grenzfläche umfasst, an welcher die Bewertungsfläche liegt.

4. Verfahren nach Anspruch 1 oder 2, wobei vorzugsweise die Referenzaberration die Aberration der in einem Punkt auf einer Netzhaut des Augenmodells konvergierenden Referenzwellenfront vor einer Brechung an der Grenzfläche beschreibt, an welcher die Bewertungsfläche liegt.

5. Verfahren nach einem der Ansprüche 1 bis 4, welches ein Ermitteln der Referenzwellenfront durch Berechnung von Propagation und Brechung ausgehend von einem Punkt auf der Netzhaut des Modellauges durch das Modellauge bis zur Bewertungsfläche umfasst.

6. Verfahren nach einem der Ansprüche 1 bis 4, wobei das Bereitstellen von individuellen Refraktionsdaten des zumindest einen Auges des Brillenträgers ein Bereitstellen einer individuellen Refraktionswellenfront des Auges des Brillenträgers umfasst, welche eine aus dem Auge des Brillenträgers austretende Wellenfront eines von einem Punkt auf der Netzhaut des Auges des Brillenträgers auslaufenden Lichts beschreibt, und wobei das Verfahren außerdem ein Ermitteln der Referenzwellenfront anhand der bereitgestellten individuellen Refraktionswellenfront durch Berechnung von Propagation und Brechung ausgehend von der individuellen Refraktionswellenfront durch das Modellauge bis zur Bewertungsfläche umfasst.

7. Verfahren nach einem der vorangegangenen Ansprüche, wobei im individuellen Augenmodell desweiteren zumindest
-- ein Hornhaut-Linsen-Abstand; und
-- die Form einer Linsenvorderfläche der Linse des Modellauges derart anhand von individuellen Messwerten für das Auge des Brillenträgers und/oder von Standardwerten und/oder anhand der bereitgestellten individuellen Refraktionsdaten festgelegt werden, dass das Modellauge (12) die bereitgestellten individuellen Refraktionsdaten aufweist, und
wobei im individuellen Augenmodell vorzugsweise desweiteren zumindest
-- eine Linsendicke; und
-- die Form der Linsenrückfläche der Linse des Modellauges derart anhand von individuellen Messwerten für das Auge des Brillenträgers und/oder von Standardwerten und/oder anhand der bereitgestellten individuellen Refraktionsdaten festgelegt werden, dass das Modellauge (12) die bereitgestellten individuellen Refraktionsdaten aufweist.

8. Verfahren nach Anspruch 7, wobei das Festlegen der Linsendicke und der Form der Linsenrückfläche anhand von vorgegebenen Standardwerten erfolgt, und wobei das Festlegen der Form der Linsenvorderfläche umfasst:
- Berechnen der Form der Linsenvorderfläche unter Berücksichtigung der bereitgestellten individuellen Refraktionsdaten.

9. Verfahren nach Anspruch 7 oder 8, wobei das Festlegen des Hornhaut-Linsen-Abstandes anhand von individuellen Messwerten für den Hornhaut-Linsen-Abstand erfolgt.

10. Verfahren nach einem der vorangegangenen Ansprüche, wobei das Festlegen der Form der Hornhautvorderfläche (18) des Auges (12) anhand von individuellen Messungen zumindest teilweise entlang der Hauptschnitte der Hornhaut des zumindest einen Auges oder anhand von individuellen Messungen der Hornhaut-Topographie des zumindest einen Auges erfolgt.

11. Vorrichtung zum Berechnen oder Optimieren eines Brillenglases zum Zweck der Herstellung des Brillenglases für zumindest ein Auge eines Brillenträgers umfassend:
- eine Datenschnittstelle zum Bereitstellen von individuellen Refraktionsdaten des zumindest einen Auges (12) des Brillenträgers
- ein Modellierungsmodul zum Festlegen eines individuellen Augenmodells, welches zumindest
-- eine Form einer Hornhautvorderfläche (18) eines Modellauges (12); und
-- eine Referenzaberration an einer Bewertungsfläche innerhalb des Modellauges, wobei die Bewertungsfläche an einer Grenzfläche des Modellauges (12) liegt und vor einer Linsenrückfläche des Modellauges (12) angeordnet ist,
derart anhand von individuellen Messwerten für das Auge des Brillenträgers und/oder von Standardwerten und/oder anhand der bereitgestellten individuellen Refraktionsdaten festgelegt werden, dass das Modellauge (12) die bereitgestellten individuellen Refraktionsdaten aufweist;
- eine Flächenmodelldatenbank zum Vorgeben einer ersten Fläche (14) und einer zweiten Fläche (16) für das zu berechnende bzw. optimierende Brillenglas;
- ein Hauptstrahlermittlungsmodule zum Ermitteln des Verlaufs eines Hauptstrahls (10) durch zumindest einen Durchblickspunkt (i) zumindest einer zu berechnenden oder optimierenden Fläche (14; 16) des Brillenglases in das Modellauge (12) zumindest bis zur Bewertungsfläche;
- ein Auswertemodul zum Auswerten einer Aberration einer entlang des Hauptstrahls propagierenden, aus einer auf die erste Fläche des Brillenglases auftreffenden sphärischen Wellenfront resultierenden Wellenfront an der Bewertungsfläche im Vergleich zur Referenzaberration; und
- ein Optimierungsmodul iteratives Variieren der zumindest einen zu berechnenden oder optimierenden Fläche (14; 16) des Brillenglases bis die ausgewertete Aberration einer vorgegebenen Sollaberration entspricht.

12. Computerprogrammerzeugnis, welches Programmcode enthält, der ausgelegt ist, wenn geladen und ausgeführt auf einem Computer, ein Verfahren zum Berechnen oder Optimieren eines Brillenglases gemäß einem der Ansprüche 1 bis 10 zum Zweck der Herstellung des Brillenglases durchzuführen.

13. Verfahren zum Herstellen eines Brillenglases umfassend:
Berechnen oder Optimieren eines Brillenglases nach dem Verfahren zum Berechnen oder Optimieren eines Brillenglases gemäß einem der Ansprüche 1 bis 10; und
Fertigen des so berechneten oder optimierten Brillenglases.

14. Vorrichtung zum Herstellen eines Brillenglases umfassend:
Berechnungs- oder Optimierungsmittel, welche ausgelegt sind, das Brillenglas nach einem Verfahren zum Berechnen oder Optimieren eines Brillenglases gemäß einem der Ansprüche 1 bis 10 zu berechnen oder zu optimieren; und
Bearbeitungsmittel, welche ausgelegt ist, das Brillenglas gemäß dem Ergebnis der Berechnung bzw. Optimierung zu bearbeiten.

## Claims

1. A computer-implemented method for calculating or optimizing an eyeglass lens for the purpose of manufacturing the eyeglass lens for at least one eye of a wearer, comprising the steps of:
- providing individual refraction data for the at least one eye of the wearer;
- defining an individual eye model, in which at least
-- a shape of a corneal front face (18) of a model eye (12); and
-- a reference aberration at an evaluation face within the model eye, wherein the evaluation face lies at an interface of the model eye (12) and is located in front of a lens rear face of the model eye (12),
which are determined on the basis of individual measurement values for the eyeglass wearer's eye and/or standard values and/or the provided individual refraction data, such that the model eye (12) exhibits the provided individual refraction data;
- specifying a first face (14) and a second face (16) for the eyeglass lens to be calculated or optimized;
- determining the path of a principal ray (10) through at least one vision point (i) of at least one face (14; 16) of the eyeglass lens to be calculated or optimized into the model eye (12) at least as far as the evaluation face;
- evaluating, at the evaluation face, an aberration of a wavefront resulting from a spherical wavefront incident on the first face of the eyeglass lens and propagating along the main ray in comparison to the reference aberration; and
- iteratively varying the at least one face (14; 16) of the eyeglass lens to be calculated or optimized until the evaluated aberration corresponds to a predetermined target aberration.

2. The method according to claim 1, wherein the reference aberration describes an aberration of a reference wavefront that converges substantially at a single point on the retina of the eye model prior to refraction at the rear face of a lens of the model eye.

3. A method according to claim 1 or 2, wherein, preferably, the evaluation of the aberration of the wavefront propagating along the principal ray at the evaluation face comprises calculating a refraction of the wavefront at the interface at which the evaluation face is located.

4. A method according to claim 1 or 2, wherein, preferably, the reference aberration describes the aberration of the reference wavefront converging at a point on the retina of the eye model prior to refraction at the interface at which the evaluation face is located.

5. A method according to any one of claims 1 through 4, comprising determining the reference wavefront by calculating the propagation and refraction from a point on the retina of the model eye through the model eye to the evaluation face.

6. A method according to any one of claims 1 through 4, wherein providing individual refraction data of the at least one eye of the eyeglass wearer comprises providing an individual refraction wavefront of the eyeglass wearer's eye, which describes a wavefront emerging from the eyeglass wearer's eye of light emanating from a point on the retina of the eyeglass wearer's eye, and wherein the method further comprises determining the reference wavefront based on the provided individual refractive wavefront by calculating propagation and refraction starting from the individual refractive wavefront through the model eye to the evaluation face.

7. A method according to any one of the preceding claims, wherein the individual eye model further comprises at least
-- a cornea-to-lens distance; and
-- the shape of a front face of the lens of the model eye are determined based on individual measurement values for the eyeglass wearer's eye and/or standard values and/or the provided individual refraction data, such that the model eye (12) incorporates the provided individual refraction data, and wherein the individual eye model preferably further includes at least
-- a lens thickness; and
-- the shape of the rear face of the lens of the model eye is determined based on individual measurement values for the eyeglass wearer's eye and/or standard values and/or the provided individual refraction data, such that the model eye (12) exhibits the provided individual refraction data.

8. The method according to claim 7, wherein the lens thickness and the shape of the rear face of the lens are determined based on predetermined standard values, and wherein determining the shape of the front face of the lens comprises:
- calculating the shape of the front face of the lens, taking into account the provided individual refraction data.

9. A method according to claim 7 or 8, wherein the cornea-to-lens distance is determined based on individual measurements of the cornea-to-lens distance.

10. A method according to any of the preceding claims, wherein the shape of the anterior face (18) of the cornea of the eye (12) is determined based on individual measurements taken at least partially along the principal meridians of the cornea of the at least one eye or based on individual measurements of the corneal topography of the at least one eye.

11. A device for calculating or optimizing an eyeglass lens for the purpose of manufacturing the eyeglass lens for at least one eye of a wearer, comprising:
- a data interface for providing individual refraction data of the at least one eye (12) of the wearer
- a modeling module for defining an individual eye model, which comprises at least
-- a shape of a corneal anterior face (18) of a model eye (12); and
-- a reference aberration at an evaluation face within the model eye, wherein the evaluation face lies at an interface of the model eye (12) and is arranged in front of a lens rear face of the model eye (12),
which is defined based on individual measurement values for the eyeglass wearer's eye and/or standard values and/or the provided individual refraction data, such that the model eye (12) exhibits the provided individual refraction data;
- a face model database for specifying a first face (14) and a second face (16) for the eyeglass lens to be calculated or optimized;
- a principal ray determination module for determining the path of a principal ray (10) through at least one vision point (i) of at least one face (14; 16) of the eyeglass lens to be calculated or optimized into the model eye (12) at least as far as the evaluation face;
- an evaluation module for evaluating an aberration of a wavefront resulting from a spherical wavefront incident on the first face of the eyeglass lens and propagating along the main ray at the evaluation face, in comparison to the reference aberration; and
- an optimization module for iteratively varying the at least one face (14; 16) of the eyeglass lens to be calculated or optimized until the evaluated aberration corresponds to a predetermined target aberration.

12. A computer program product containing program code configured, when loaded and executed on a computer, to perform a method for calculating or optimizing an eyeglass lens according to any one of claims 1 through 10 for the purpose of manufacturing the eyeglass lens.

13. A method for manufacturing an eyeglass lens, comprising:
calculating or optimizing an eyeglass lens according to the method for calculating or optimizing an eyeglass lens as set forth in any one of claims 1 through 10; and
manufacturing the eyeglass lens thus calculated or optimized.

14. An apparatus for manufacturing an eyeglass lens, comprising:
calculation or optimization means configured to calculate or optimize the eyeglass lens according to a method for calculating or optimizing an eyeglass lens as set forth in any one of claims 1 through 10; and
machining means configured to machine the eyeglass lens in accordance with the result of the calculation or optimization.

## Revendications

1. Procédé mis en œuvre par ordinateur pour calculer ou optimiser un verre de lunettes en vue de la fabrication dudit verre pour au moins un œil d'un porteur de lunettes, comprenant les étapes suivantes :
- fournir des données de réfraction individuelles concernant ledit au moins un œil du porteur de lunettes ;
- définir un modèle oculaire individuel, dans lequel au moins
-- une forme de la surface antérieure de la cornée (18) d'un œil modèle (12) ; et
-- une aberration de référence au niveau d'une surface d'évaluation à l'intérieur de l'œil modèle, la surface d'évaluation se situant au niveau d'une interface de l'œil modèle (12) et étant disposée en avant d'une surface postérieure de la lentille de l'œil modèle (12),
définie à partir de valeurs de mesure individuelles relatives à l'œil du porteur de lunettes et/ou de valeurs standard et/ou à partir des données de réfraction individuelles fournies, de telle sorte que l'œil modèle (12) présente les données de réfraction individuelles fournies ;
- spécification d'une première surface (14) et d'une deuxième surface (16) pour le verre de lunettes à calculer ou à optimiser ;
- détermination du tracé d'un rayon principal (10) passant par au moins un point de vision (*i*) d'au moins une surface (14; 16) du verre de lunettes à calculer ou à optimiser, dans l'œil modèle (12), au moins jusqu'à la surface d'évaluation ;
- l'évaluation, au niveau de la surface d'évaluation, d'une aberration d'un front d'onde se propageant le long du rayon principal et résultant d'un front d'onde sphérique incident sur la première surface du verre de lunettes, par rapport à l'aberration de référence ; et
- faire varier de manière itérative la au moins une surface (14; 16) du verre de lunettes à calculer ou à optimiser jusqu'à ce que l'aberration évaluée corresponde à une aberration de consigne prédéfinie.

2. Procédé selon la revendication 1, dans lequel l'aberration de référence décrit une aberration d'un front d'onde de référence convergeant essentiellement en un point sur la rétine du modèle oculaire, avant une réfraction au niveau de la face postérieure d'une lentille du modèle oculaire.

3. Procédé selon la revendication 1 ou 2, dans lequel l'évaluation de l'aberration du front d'onde se propageant le long du rayon principal au niveau de la surface d'évaluation comprend de préférence le calcul d'une réfraction du front d'onde au niveau de l'interface sur laquelle se trouve la surface d'évaluation.

4. Procédé selon la revendication 1 ou 2, dans lequel l'aberration de référence décrit de préférence l'aberration du front d'onde de référence convergeant vers un point de la rétine du modèle oculaire avant une réfraction au niveau de l'interface sur laquelle se trouve la surface d'évaluation.

5. Procédé selon l'une des revendications 1 à 4, qui comprend la détermination du front d'onde de référence par le calcul de la propagation et de la réfraction à partir d'un point situé sur la rétine de l'œil modèle, à travers l'œil modèle, jusqu'à la surface d'évaluation.

6. Procédé selon l'une des revendications 1 à 4, dans lequel la fourniture de données de réfraction individuelles d'au moins un œil du porteur de lunettes comprend la fourniture d'un front d'onde de réfraction individuel de l'œil du porteur de lunettes, qui décrit un front d'onde sortant de l'œil du porteur de lunettes, correspondant à une lumière émanant d'un point situé sur la rétine de l'œil du porteur de lunettes, et dans lequel le procédé comprend en outre la détermination du front d'onde de référence à partir du front d'onde de réfraction individuel fourni, par calcul de la propagation et de la réfraction à partir du front d'onde de réfraction individuel, à travers l'œil modèle jusqu'à la surface d'évaluation.

7. Procédé selon l'une des revendications précédentes, dans lequel le modèle oculaire individuel comprend en outre au moins
-- une distance cornéo-cristallinienne ; et
-- la forme d'une surface antérieure de la lentille de l'œil modèle sont définis à partir de valeurs de mesure individuelles relatives à l'œil du porteur de lunettes et/ou de valeurs standard et/ou à partir des données de réfraction individuelles fournies, de telle sorte que l'œil modèle (12) présente les données de réfraction individuelles fournies, et
dans lequel le modèle oculaire individuel comprend de préférence en outre au moins
-- une épaisseur de lentille ; et
-- la forme de la face postérieure de la lentille de l'œil modèle sont déterminées à partir de valeurs de mesure individuelles relatives à l'œil du porteur de lunettes et/ou de valeurs standard et/ou à partir des données de réfraction individuelles fournies, de telle sorte que l'œil modèle (12) présente les données de réfraction individuelles fournies.

8. Procédé selon la revendication 7, dans lequel la détermination de l'épaisseur de la lentille et de la forme de la face postérieure de la lentille s'effectue à partir de valeurs standard prédéfinies, et dans lequel la détermination de la forme de la face antérieure de la lentille comprend :
- le calcul de la forme de la face avant de la lentille en tenant compte des données de réfraction individuelles fournies.

9. Procédé selon la revendication 7 ou 8, dans lequel la détermination de la distance cornéo-lentillaire s'effectue à partir de valeurs de mesure individuelles relatives à la distance cornéo-lentillaire.

10. Procédé selon l'une des revendications précédentes, dans lequel la détermination de la forme de la face antérieure (18) de la cornée de l'œil (12) s'effectue à partir de mesures individuelles prises au moins en partie le long des sections principales de la cornée dudit au moins un œil ou à partir de mesures individuelles de la topographie cornéenne dudit au moins un œil.

11. Dispositif destiné à calculer ou à optimiser un verre de lunettes en vue de la fabrication dudit verre pour au moins un œil d'un porteur de lunettes, comprenant :
- une interface de données destinée à fournir des données de réfraction individuelles dudit au moins un œil (12) du porteur de lunettes
- un module de modélisation destiné à définir un modèle oculaire individuel, qui comprend au moins
-- une forme de la surface antérieure de la cornée (18) d'un œil modèle (12) ; et
-- une aberration de référence au niveau d'une surface d'évaluation à l'intérieur de l'œil modèle, la surface d'évaluation se situant au niveau d'une interface de l'œil modèle (12) et étant disposée en avant d'une surface postérieure de la lentille de l'œil modèle (12),
définie à partir de valeurs de mesure individuelles relatives à l'œil du porteur de lunettes et/ou de valeurs standard et/ou à partir des données de réfraction individuelles fournies, de telle sorte que l'œil modèle (12) présente les données de réfraction individuelles fournies ;
- une base de données de modèles de surfaces permettant de spécifier une première surface (14) et une deuxième surface (16) pour le verre de lunettes à calculer ou à optimiser ;
- un module de détermination du rayon principal destiné à déterminer le tracé d'un rayon principal (10) passant par au moins un point de vision (i) d'au moins une surface (14; 16) du verre de lunettes à calculer ou à optimiser, dans l'œil modèle (12), au moins jusqu'à la surface d'évaluation ;
- un module d'évaluation destiné à évaluer, au niveau de la surface d'évaluation, une aberration d'un front d'onde se propageant le long du faisceau principal et résultant d'un front d'onde sphérique incident sur la première surface du verre de lunettes, par rapport à l'aberration de référence ; et
- un module d'optimisation destiné à faire varier de manière itérative la au moins une surface (14; 16) du verre de lunettes à calculer ou à optimiser jusqu'à ce que l'aberration évaluée corresponde à une aberration de consigne prédéfinie.

12. Produit logiciel contenant un code de programme conçu pour, lorsqu'il est chargé et exécuté sur un ordinateur, mettre en œuvre un procédé de calcul ou d'optimisation d'un verre de lunettes selon l'une des revendications 1 à 10 en vue de la fabrication dudit verre de lunettes.

13. Procédé de fabrication d'un verre de lunettes comprenant :
le calcul ou l'optimisation d'un verre de lunettes selon le procédé de calcul ou d'optimisation d'un verre de lunettes selon l'une des revendications 1 à 10 ; et
la fabrication du verre de lunettes ainsi calculé ou optimisé.

14. Dispositif de fabrication d'un verre de lunettes comprenant :
des moyens de calcul ou d'optimisation, conçus pour calculer ou optimiser le verre de lunettes selon un procédé de calcul ou d'optimisation d'un verre de lunettes conformément à l'une des revendications 1 à 10 ; et
des moyens d'usinage, conçus pour usiner le verre de lunettes conformément au résultat du calcul ou de l'optimisation.
